# EUROPÄISCHE PATENTANMELDUNG

(11) **EP 2 266 399 A1**
(43) Veröffentlichungstag der Anmeldung: **29.12.2010**
(21) Anmeldenummer: 10171972.2
(22) Anmeldetag: 09.05.2007
(51) Int. Cl.: A01N 43/38, A01N 47/06, A01P 7/04

(54) **Verwendung von Tetramsäurederivaten zur Bekämpfung von Insekten aus der Familie der Blattkäfer (Chrysomelidae)**

(30) Priorität: 12.05.2006 DE 102006022821
(62) Teilanmeldung aus: 07725016.5
(71) Anmelder: Bayer CropScience AG, 40789 Monheim (DE)
(72) Erfinder: Fischer, Reiner, Dr., 40789 Monheim (DE); Brueck, Ernst, Dr., 53343 Wachtberg-Villip (DE); van Waetermeulen, Xavier, Alain, Marie, 69480 Morance (FR)

(57) **Zusammenfassung**

Die vorliegende Erfindung betrifft die Verwendung von Verbindungen der Formel (I) 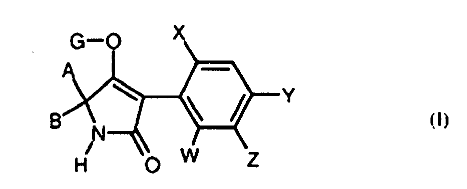 zur Bekämpfung von Insekten aus der Familie der Blattkäfer (Chrysomelidae), in welcher A, B, G, W, X, Y und Z die oben angegebenen Bedeutungen haben.

## Beschreibung

Die vorliegende Erfindung betrifft die Verwendung von Tetramsäurederivaten zur Bekämpfung von Insekten aus der Ordnung der Käfer (Coleoptera), Thrips (Thysanoptera), Wanzen (Hemiptera), Fliegen (Diptera), Zikaden (Auchenorrhynchae) und den Familien der Gallmücken (Cecidomyiidae), Miniermotten (Gracillariidae), Wickler (Tortricidae) und Blattwespen (Tenthredinidae).

Die Tetramsäurederivate sind bekannt aus EP-A-456 063, EP-A-521 334, EP-A-596 298, EP-A-613 884, WO 95/01 997, WO 95/26 954, WO 95/20 572, EP-A-0 668 267, WO 96/25 395, WO 96/35 664, WO 97/01 535, WO 97/02 243, WO 97/36 868, WO 97/43 275, WO 98/05638, WO 98/06721, WO 98/25928, WO 99/16748, WO 99/24437, WO 99/43649, WO 99/48869 und WO 99/55673, WO 01/09092, WO 01/17972, WO 01/23354, WO 01/74770, WO 03/013249, WO 2004/007 448, WO 2004/024 688, WO 04/065 366, WO 04/080 962, WO 04/111 042, WO 05/044 791, WO 05/044 796, WO 05/048 710, WO 05/049 596, WO 05/066 125, WO 05/092 897, WO 06/000 355, WO 06/029799, WO 06/056281, WO 06/056282, WO 06/089633.

Die insektizide Wirkung einiger dieser Verbindungen gegen Insekten aus der Unterordnung der Sternorhyncha sind bekannt (WO 06/077071). Auch die Wirkung gegen den Meerrettich-Blattkäfer Phaedon cochlearie an Kohl wurde beschrieben. Weiterhin beschrieben ist die Wirkung gegen die grüne Reiszikade Nephotettix cinticeps in Reis.

Überraschenderweise wurde nun gefunden, dass Tetramsäurederivate auch gut zur Bekämpfung weiterer tierischer Schädlinge aus den Unterordnungen der Heteroptera, Terebrantia, Nematocera und Brachycera geeignet sind.

Weiterhin wurde gefunden, dass Tetramsäurederivate auch gegen Zwergzikaden (Cicadellidae) in dikotylen Kulturen wie Gemüse, Baumwolle, Kartoffeln und überraschend auch in mehrjährigen Kulturen wie in tropischen Früchten, Coniferen, Wein, Tee und Zierpflanzen eine sehr gute Wirkung zeigen.

Außerdem wurde gefunden, dass Tetramsäurederivate auch gegen Rüsselkäfer (Curculionidae) und Blattkäfer (Chrysomelidae) in weiteren einjährigen Kulturen wie Kartoffeln, Tabak, Melonen, Rüben, Raps, Getreide, Fruchtgemüse, Knollengemüse, Blattgemüse, Wurzelgemüse, Stängelgemüse, Zwiebelgemüse, Blütenstände als Gemüse und überraschend auch in mehrjährigen Kulturen wie beispielsweise Zitrus, Kern- und Steinobst, Nüssen, Mandeln, Beerenfrüchten, Wein und Hopfen sowie tropischen Kulturen, Zierpflanzen, Baumwolle und Gewürzen eine gute Wirkung zeigen.

Ebenso wurde gefunden, dass Tetramsäurederivate auch gegen Wickler (Tortricidae) und Miniermotten (Gracillariidae) in mehrjährigen Kulturen wie beispielsweise Stein- und Kernobst und Zitrus eine gute Wirkung zeigen.

Darüber hinaus wurde gefunden, dass Tetramsäurederivate auch gegen Gallmücken (Cecidomyiidae) in mehrjährigen Kulturen wie z. B. Citrus, Kernobst aber auch in Gemüse und Getreide eine gute Wirkung zeigen.

Auch wurde gefunden, dass Tetramsäurederivate gegen Blattwespen (Tenthredinidae) in mehrjährigen Kulturen wie z.B. Kernobst, Steinobst und im Forst eine gute Wirkung zeigen.

Die vorliegende Erfindung betrifft demnach die Verwendung von Tetramsäurederivaten zur Bekämpfung von Insekten aus den Familien a) der Stinkwanzen (Pentatomidae), Weichwanzen (Miridae), Thripse (Thripidae), Minierfliegen (Agromyzidae), Gallmücken (Cecidomyiidae), Fruchtfliegen (Tephritidae) und Blumenfliegen (Anthomyiidae) in ein- und mehrjährigen sowie tropischen Kulturen sowie b) zur Bekämpfung von Schädlingen aus der Familie der Zwergzikaden (Cicadellidae) in dikotylen Kulturen, sowie ein- und mehrjährigen Kulturen und in tropischen Kulturen und c) zur Bekämpfung von Insekten aus den Familien der Blattkäfer (Chrysomelidae) und Rüsselkäfer (Curculionidae) in einjährigen Kulturen wie Kartoffeln, Tabak, Melonen, Rüben, Raps, Getreide, Fruchtgemüse, Knollengemüse, Blattgemüse, Wurzelgemüse, Stängelgemüse, Zwiebelgemüse, Blütenstände als Gemüse und überraschend auch in mehrjährigen Kulturen wie beispielsweise Zitrus, Kern- und Steinobst, Nüssen, Mandeln, Beerenfrüchten, Wein und Hopfen sowie tropischen Kulturen, Zierpflanzen, Baumwolle und Gewürzen, d) zur Bekämpfung von Schädlingen aus den Familien der Wickler (Tortricidae) und der Miniermotten (Gracillariidae) in mehrjährigen Kulturen wie beispielsweise Zitrus, Stein- und Kernobst und Koniferen, e) zur Bekämpfung von Gallmücken (Cecidomyiidae) in einjährigen Kulturen wie z.B. Gemüse, Getreide, Kartoffeln und mehrjährigen Kulturen wie z. B. Zitrus, Kernobst, Koniferen und Forst f) zur Bekämpfung von Blattwespen (Tenthredinidae) z.B. in Kernobst, Steinobst, Forst.

Die nur allgemein beschriebenen zu schützenden Kulturen sind im Folgenden differenziert und näher spezifiziert. So versteht man hinsichtlich der Anwendung unter Gemüse z.B. Fruchtgemüse und Blütenstände als Gemüse, beispielsweise Paprika, Peperoni, Tomaten, Auberginen, Gurken, Kürbisse, Zucchini, Ackerbohnen, Stangenbohnen, Buschbohnen, Erbsen, Artischocken, Mais; aber auch Blattgemüse, beispielsweise Kopfsalat, Chicoreé, Endivien, Kressen, Rauken, Feldsalat, Eisbergsalat, Lauch, Spinat, Mangold;
weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch;
ferner Kohlgemüse, wie Blumenkohl, Broccoli, Kohlrabi, Rotkohl, Weißkohl, Grünkohl, Wirsing, Rosenkohl, Chinakohl.
So versteht man hinsichtlich der Anwendung in Getreidekulturen beispielsweise Weizen, Gerste, Roggen, Hafer, Triticale aber auch Mais, Hirse und Reis;
hinsichtlich der Anwendung versteht man unter Obst oder mehrjährigen Kulturen Zitrus, wie beispielsweise Orangen, Grapefruits, Mandarinen, Zitronen, Limetten, Bitterorangen, Kumquats, Satsumas;
aber auch Kernobst, wie beispielsweise Äpfel, Birnen und Quitten und Steinobst, wie beispielsweise Pfirsiche, Nektarinen, Kirschen, Pflaumen, Zwetschgen, Aprikosen;
weiterhin Wein, Hopfen, Oliven, Tee und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas, Guaven,
außerdem Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamiannüsse, Erdnüsse,
darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.
Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amyrillis, Dahlien, Azaleen, Malven,
aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien,
ferner z.B. Sträucher und Koniferen wie beispielsweise Ficus, Rhododendron, Fichten, Tannen, Kiefern, Eiben, Wacholder, Pinien, Oleander.
Hinsichtlich der Anwendung versteht man unter Gewürzen ein- und mehrjährige Pflanzen wie beispielsweise Anis, Chilli, Paprika, Pfeffer, Vanille, Majoran, Thymian, Gewürznelken, Wacholderbeeren, Zimt, Estragon, Koryander, Safran, Ingwer.

Bei den Tetramsäurederivaten handelt es sich um Verbindungen der Formel (I) 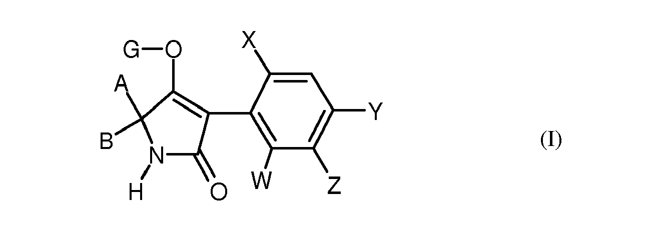 in welcher
- X: für Halogen, Alkyl, Alkoxy, Halogenalkyl, Halogenalkoxy oder Cyano steht,
- W, Y und Z: unabhängig voneinander für Wasserstoff, Halogen, Alkyl, Alkoxy, Halogenalkyl, Halogenalkoxy oder Cyano stehen,
- A: für Wasserstoff, jeweils gegebenenfalls durch Halogen substituiertes Alkyl, Alkoxyalkyl, gesättigtes, gegebenenfalls substituiertes Cycloalkyl steht, in welchem gegebenenfalls mindestens ein Ringatom durch ein Heteroatom ersetzt ist,
- B: für Wasserstoff oder Alkyl steht, oder
- A und B: gemeinsam mit dem Kohlenstoffatom an das sie gebunden sind, für einen gesättigten oder ungesättigten, gegebenenfalls mindestens ein Heteroatom enthaltenden unsubstituierten oder substituierten Cyclus stehen,
- G: für Wasserstoff (a) oder für eine der Gruppen 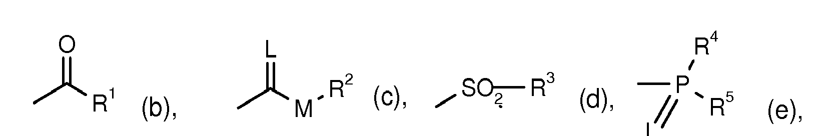 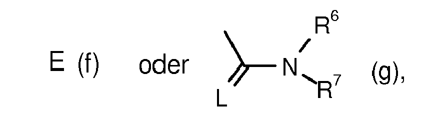
steht,
worin
- E: für ein Metallion oder ein Ammoniumion steht,
- L: für Sauerstoff oder Schwefel steht,
- M: für Sauerstoff oder Schwefel steht,
- R¹: für jeweils gegebenenfalls durch Halogen substituiertes Alkyl, Alkenyl, Alkoxy- alkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
- R²: für jeweils gegebenenfalls durch Halogen substituiertes Alkyl, Alkenyl, Alkoxy- alkyl, Polyalkoxyalkyl oder für jeweils gegebenenfalls substituiertes Cycloalkyl, Phenyl oder Benzyl steht,
- R³: für gegebenenfalls durch Halogen substituiertes Alkyl oder gegebenenfalls substi- tuiertes Phenyl steht,
- R⁴ und R⁵: unabhängig voneinander für jeweils gegebenenfalls durch Halogen substituier- tes Alkyl, Alkoxy, Alkylamino, Dialkylamino, Alkylthio, Alkenylthio, Cycloalkyl- thio oder für jeweils gegebenenfalls substituiertes Phenyl, Benzyl, Phenoxy oder Phenylthio stehen und
- R⁶ und R⁷: unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl oder gemeinsam mit dem N-Atom, an das sie gebunden sind, für einen gegebenenfalls durch Sauerstoff oder Schwefel unterbrochenen gegebenenfalls substituierten Ring stehen
in Form ihrer Isomerengemische oder reinen Isomeren.

Bevorzugt einsetzbar sind Tetramsäurederivate der oben genannten Formel (I), in welcher die Reste die folgende Bedeutung haben:
- W: steht bevorzugt für Wasserstoff, C₁-C₄-Alkyl, C₁-C₄-Alkoxy, Chlor, Brom oder Fluor,
- X: steht bevorzugt für C₁-C₄-Alkyl, C₁-C₄-Alkoxy, C₁-C₄-Halogenalkyl, Fluor, Chlor oder Brom,
- Y und Z: stehen unabhängig voneinander bevorzugt für Wasserstoff, C₁-C₄-Alkyl, Halogen, C₁- C₄-Alkoxy oder C₁-C₄-Halogenalkyl,
- A: steht bevorzugt für Wasserstoff oder jeweils gegebenenfalls durch Halogen substituiertes C₁-C₆-Alkyl oder C₃-C₈-Cycloalkyl,
- B: steht bevorzugt für Wasserstoff, Methyl oder Ethyl,
- A, B: und das Kohlenstoffatom an das sie gebunden sind, stehen bevorzugt für gesättigtes C₃-C₆- Cycloalkyl, worin gegebenenfalls ein Ringglied durch Sauerstoff oder Schwefel ersetzt ist und welches gegebenenfalls einfach oder zweifach durch C₁-C₄-Alkyl, Trifluormethyl oder C₁-C₄-Alkoxy substituiert ist,
- G: steht bevorzugt für Wasserstoff (a) oder für eine der Gruppen 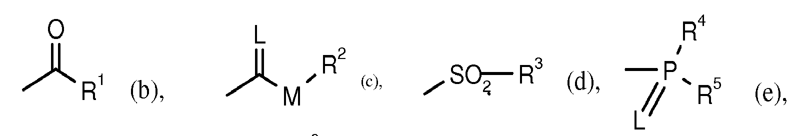 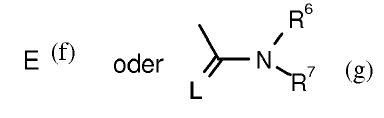 insbesondere für (a), (b), (c) oder (g)
in welchen
- E: für ein Metallion oder ein Ammoniumion steht,
- L: für Sauerstoff oder Schwefel steht und
- M: für Sauerstoff oder Schwefel steht,
- R¹: steht bevorzugt für jeweils gegebenenfalls durch Halogen substituiertes C₁-C₁₀-Alkyl, C₂- C₁₀-Alkenyl, C₁-C₄-Alkoxy-C₁-C₄-alkyl, C₁-C₄-Alkylthio-C₁-C₄-alkyl oder gegebenenfalls durch Fluor, Chlor, C₁-C₄-Alkyl oder C₁-C₂-Alkoxy substituiertes C₃-C₆-Cycloalkyl, für gegebenenfalls durch Fluor, Chlor, Brom, Cyano, Nitro, C₁-C₄-Alkyl, C₁-C₄-Alkoxy, Trifluormethyl oder Trifluormethoxy substituiertes Phenyl, für jeweils gegebenenfalls durch Chlor oder Methyl substituiertes Pyridyl oder Thienyl,
- R²: steht bevorzugt für jeweils gegebenenfalls durch Fluor oder Chlor substituiertes C₁-C₁₀- Alkyl, C₂-C₁₀-Alkenyl, C₁-C₄-Alkoxy-C₂-C₄-alkyl, für gegebenenfalls durch Methyl oder Methoxy substituiertes C₅-C₆-Cycloalkyl oder für jeweils gegebenenfalls durch Fluor, Chlor, Brom, Cyano, Nitro, C₁-C₄-Alkyl, C₁-C₄- Alkoxy, Trifluormethyl oder Trifluormethoxy substituiertes Phenyl oder Benzyl,
- R³: steht bevorzugt für gegebenenfalls durch Fluor substituiertes C₁-C₄-Alkyl oder für ge- gebenenfalls durch Fluor, Chlor, Brom, C₁-C₄-Alkyl, C₁-C₄-Alkoxy, Trifluormethyl, Tri- fluormethoxy, Cyano oder Nitro substituiertes Phenyl,
- R⁴: steht bevorzugt für jeweils gegebenenfalls durch Fluor oder Chlor substituiertes C₁-C₄- Alkyl, C₁-C₄-Alkoxy, C₁-C₄-Alkylamino, C₁-C₄-Alkylthio oder für jeweils gegebenenfalls durch Fluor, Chlor, Brom, Nitro, Cyano, C₁-C₄-Alkoxy, Trifluormethoxy, C₁-C₄-Alkylthio, C₁-C₄-Halogenalkylthio, C₁-C₄-Alkyl oder Trifluormethyl substituiertes Phenyl, Phenoxy oder Phenylthio,
- R⁵: steht bevorzugt für C₁-C₄-Alkoxy oder C₁-C₄-Thioalkyl,
- R⁶: steht bevorzugt für C₁-C₆-Alkyl, C₃-C₆-Cycloalkyl, C₁-C₆-Alkoxy, C₃-C₆-Alkenyl oder C₁-C₄-Alkoxy-C₁-C₄-alkyl,
- R⁷: steht bevorzugt für C₁-C₆-Alkyl, C₃-C₆-Alkenyl oder C₁-C₄-Alkoxy-C₁-C₄-alkyl,
- R⁶ und R⁷: stehen zusammen bevorzugt für einen gegebenenfalls durch Methyl oder Ethyl substi- tuierten C₃-C₆-Alkylenrest, in welchem gegebenenfalls ein Kohlenstoffatom durch Sauer- stoff oder Schwefel ersetzt ist in Form ihrer Isomerengemische oder reinen Isomeren.

Besonders bevorzugt einsetzbar sind Tetramsäurederivate der oben genannten Formel (I), in welcher die Reste die folgende Bedeutung haben:
- W: steht besonders bevorzugt für Wasserstoff, Methyl, Ethyl, Chlor, Brom oder Methoxy,
- X: steht besonders bevorzugt für Chlor, Brom, Methyl, Ethyl, Propyl, i-Propyl, Methoxy, Ethoxy oder Trifluormethyl,
- Y und Z: stehen besonders bevorzugt unabhängig voneinander für Wasserstoff, Fluor, Chlor, Brom, Methyl, Ethyl, Propyl, i-Propyl, Trifluormethyl oder Methoxy,
- A: steht besonders bevorzugt für Methyl, Ethyl, Propyl, i-Propyl, Butyl, i-Butyl, sec.-Butyl, tert.-Butyl, Cyclopropyl, Cyclopentyl oder Cyclohexyl,
- B: steht besonders bevorzugt für Wasserstoff, Methyl oder Ethyl, oder
- A, B: und das Kohlenstoffatom an das sie gebunden sind, stehen besonders bevorzugt für gesättig- tes C₆-Cycloalkyl, worin gegebenenfalls ein Ringglied durch Sauerstoff ersetzt ist und welches gegebenenfalls einfach durch Methyl, Ethyl, Trifluormethyl, Methoxy, Ethoxy, Propoxy oder Butoxy substituiert ist,
- G: steht besonders bevorzugt für Wasserstoff (a) oder für eine der Gruppen 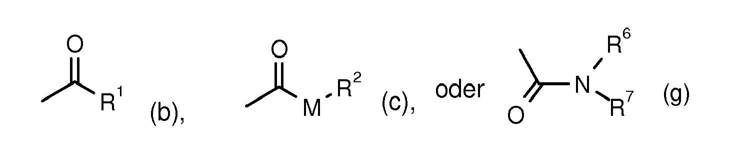 in welchen
M für Sauerstoff oder Schwefel steht,
- R¹: steht besonders bevorzugt für C₁-C₈-Alkyl, C₂-C₄-Alkenyl, Methoxymethyl, Ethoxymethyl, Ethylthiomethyl, Cyclopropyl, Cyclopentyl oder Cyclohexyl, für gegebenenfalls einfach bis zweifach durch Fluor, Chlor, Brom, Cyano, Nitro, Methyl, Ethyl, Methoxy, Trifluormethyl oder Trifluormethoxy substituiertes Phenyl, für jeweils gegebenenfalls durch Chlor oder Methyl substituiertes Pyridyl oder Thienyl,
- R²: steht besonders bevorzugt für C₁-C₈-Alkyl, C₂-C₄-Alkenyl, Methoxyethyl, Ethoxyethyl oder für Phenyl oder Benzyl,
- R⁶ und R⁷: stehen unabhängig voneinander besonders bevorzugt für Methyl, Ethyl oder zusammen für einen C₅-Alkylenrest, in welchem die C₃-Methylengruppe durch Sauerstoff ersetzt ist in Form ihrer Isomerengemische oder reinen Isomeren.

Ganz besonders bevorzugt einsetzbar sind Tetramsäurederivate der oben genannten Formel (I), in welcher die Reste die folgende Bedeutung haben:
- W: steht ganz besonders bevorzugt für Wasserstoff oder Methyl,
- X: steht ganz besonders bevorzugt für Chlor, Brom oder Methyl,
- Y und Z: stehen ganz besonders bevorzugt unabhängig voneinander für Wasserstoff, Chlor, Brom oder Methyl,
- A, B: und das Kohlenstoffatom an das sie gebunden sind, stehen ganz besonders bevorzugt für ge- sättigtes C₆-Cycloalkyl, in welchem gegebenenfalls ein Ringglied durch Sauerstoff ersetzt ist und welches gegebenenfalls einfach durch Methyl, Trifluormethyl, Methoxy, Ethoxy, Propoxy oder Butoxy substituiert ist,
- G: steht ganz besonders bevorzugt für Wasserstoff (a) oder für eine der Gruppen 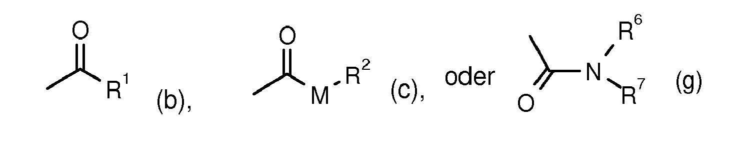 in welchen
- M: für Sauerstoff oder Schwefel steht,
- R¹: steht ganz besonders bevorzugt für C₁-C₈-Alkyl, C₂-C₄-Alkenyl, Methoxymethyl, Ethoxy- methyl, Ethylthiomethyl, Cyclopropyl, Cyclopentyl, Cyclohexyl oder für gegebenenfalls einfach durch Fluor, Chlor, Brom, Methyl, Methoxy, Trifluormethyl, Trifluormethoxy, Cyano oder Nitro substituiertes Phenyl, für jeweils gegebenenfalls durch Chlor oder Methyl substituiertes Pyridyl oder Thienyl,
- R²: steht ganz besonders bevorzugt für C₁-C₈-Alkyl, C₂-C₄-Alkenyl, Methoxyethyl, Ethoxy- ethyl, Phenyl oder Benzyl,
- R⁶ und R⁷: stehen unabhängig voneinander ganz besonders bevorzugt für Methyl, Ethyl oder zu- sammen für einen C₅-Alkylenrest, in welchem die C₃-Methylengruppe durch Sauerstoff er- setzt ist in Form ihrer Isomerengemische oder reinen Isomeren.

Insbesondere bevorzugt einsetzbar sind Tetramsäurederivate der oben genannten Formel (I), in welcher die Reste die folgende Bedeutung haben:

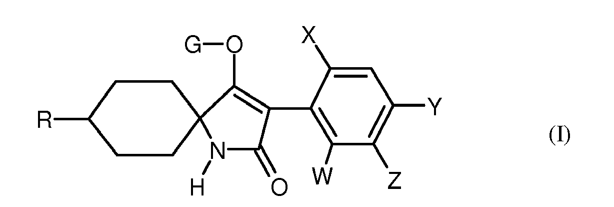

| **Beispiel- Nr.** | **W** | **X** | **Y** | **Z** | **R** | **G** | **Fp.°C** |
|---|---|---|---|---|---|---|---|
| I-1 | H | Br | H | CH₃ | OCH₃ | CO-i-C₃H₇ | 122 |
| I-2 | H | Br | H | CH₃ | OCH₃ | CO₂-C₂H₅ | 140-142 |
| I-3 | H | CH₃ | H | CH₃ | OCH₃ | H | > 220 |
| I-4 | H | CH₃ | H | CH₃ | OCH₃ | CO₂-C₂H₅ | 128 |
| I-5 | CH₃ | CH₃ | H | Br | OCH₃ | H | > 220 |
| I-6 | CH₃ | CH₃ | H | Cl | OCH₃ | H | 219 |
| I-7 | H | Br | CH₃ | CH₃ | OCH₃ | CO-i-C₃H₇ | 217 |
| I-8 | H | CH₃ | Cl | CH₃ | OCH₃ | CO₂C₂H₅ | 162 |
| I-9 | CH₃ | CH₃ | CH₃ | CH₃ | OCH₃ | H | >220 |
| I-10 | CH₃ | CH₃ | H | Br | OC₂H₅ | CO-i-C₃H₇ | 212-214 |
| I-11 | H | CH₃ | CH₃ | CH₃ | OC₂H₅ | CO-n-C₃H₇ | 134 |
| I-12 | H | CH₃ | CH₃ | CH₃ | OC₂H₅ | CO-i-C₃H₇ | 108 |
| I-13 | H | CH₃ | CH₃ | CH₃ | OC₂H₅ | CO-c-C₃H₅ | 163 |

in Form ihrer cis/trans-Isomerengemische oder ihrer reinen cis-Isomeren.

Die Verbindungen der Formel (I) sind bekannte Verbindungen, deren Herstellung in den Patenten/Patentanmeldungen, die auf Seite 1 zitiert sind, beschrieben sind (siehe vor allem WO 97/01 535, WO 97/36 868, WO 98/05 638).

Hervorgehoben sind die cis-Isomeren der Formeln (1-3) und (1-4) bekannt aus WO 04/007448.

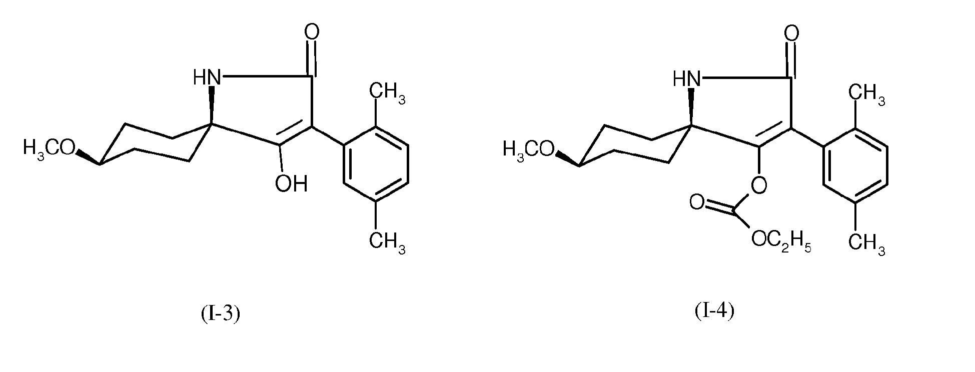

Bevorzugt sind aus der Familie der Stinkwanzen (Pentatomidae): Antestiopsis spp., Dichelops spp., Eurygaster spp., Euschistus spp., Nezara spp., Obealus spp., Piezodorus spp. und Scothinophora spp. in Kulturen wie z.B. Obst, Gemüse, Rüben, Getreide, Reis, Mais und Soja.

Bevorzugt sind aus der Familie der Weichwanzen (Miridae): Collaria spp., Calocoris spp., Heliopeltis spp., Horcias spp., Lygus spp. und Psallus spp. in Kulturen wie z.B. Obst, Nüssen, Kartoffel, Gemüse, in tropischen Kulturen, Baumwolle, Zierpflanzen, Tee, Beerenfrüchte und Soja.

Bevorzugt sind aus der Familie der Thripse (Thripidae): Anaphothrips spp., Baliothrips spp., Caliothrips spp., Frankliniella spp., Heliothrips spp., Hercinothrips spp., Rhipiphorothrips spp., Scirtothrips spp., Selenothrips spp. und Thrips spp., in Kulturen wie z.B. Obst, Baumwolle, Wein, Tee, Reis, Nüssen, tropischen Kulturen, Zierpflanzen, Coniferen, Tabak, Gewürze, Gemüse, Beerenfrüchte, Melonen, Zitrus, Kartoffeln und Rüben.

Bevorzugt sind aus den Familien der Minierfliegen (Agromyzidae) und Blumenfliegen (Anthomyiidae): Agromyza spp., Amauromyza spp., Atherigona spp., Chlorops spp., Liriomyza spp., Oscinella spp., Pegomyia spp. in Kulturen wie z.B. Gemüse, Melonen, Getreide, Mais, Kartoffeln, Rüben, Nüssen, Zierpflanzen.

Bevorzugt sind aus der Familie der Zwergzikaden (Cicadellidae); Circulifer spp., Dalbus spp., Empoasca spp., Erythroneura spp., Homalodisca spp., Iodioscopus spp., Oncometopia spp., in Kulturen wie z.B. Zitrus, Obst, Wein, Kartoffeln, Gemüse, Zierpflanzen, Coniferen, Melonen, Baumwolle, Beerenfrüchte, Tee, Nüssen und tropischen Kulturen.

Weiterhin bevorzugt sind aus der Familie der Rüsselkäfer (Curculionidae): Anthonomus spp., Apion spp., Bothynoderes spp., Ceutorhynchus spp., Cleonus spp., Contrachelus spp., Cosmopolites spp., Curculio spp., Hypera spp., Lissorphoptrus spp., Lixus spp., Premnotrypes spp., Sternechus spp., Tanymecus spp. in Kulturen wie z.B. Gemüse, Kartoffeln, Obst, Zierpflanzen, Baumwolle, Raps, Rüben, Soja und Nüsse.

Außerdem bevorzugt sind aus der Familie der Blattkäfer (Chrysomelidae):

| | |
|---|---|
| Aulacophora spp. | in Melonen, Gemüse, Kartoffeln, Rüben, Raps, Zierpflanzen, Beerenfrüchte, |
| | |
| Cassida spp. | in Rüben, |
| Lema spp. | in Getreide, Reis, |
| Leptinotarsa spp. | in Kartoffeln, Gemüse, |
| Haltica spp. | in Wein, |
| Phyllotreta spp. | in Gemüse und Raps. |

Bevorzugt sind aus der Familie der Wickler (Tortricidae):
Adoxophyes spp., Cocoecia spp., Carpocapsa spp., Clysia spp., Acleris spp., Argyrotaenia spp., Homona spp., Laspeyresia spp., Lobesia spp., Pandemis spp., Polychrosis spp. in Kulturen wie Kern- und Steinobst, Gemüse, Koniferen, Nüssen, Wein, Zierpflanzen.

Bevorzugt sind aus der Familie der Miniermotten (Gracillariidae):
Caloptilia spp., Gracillaria spp., Lithocolletis spp., Leucoptera spp., Phtorimaea spp., Phylloenistis spp. in Kulturen wie Kernobst, Steinobst, Wein, Nüsse, Zitrus, Koniferen, Kartoffeln, Kaffee.

Bevorzugt sind aus der Familie der Gallmücken (Cecodomyiidae):
Contarinia spp., Dasineura spp., Diplosis spp. in Kulturen wie Zitrus, Kernobst, Steinobst, Gemüse, Getreide, Kartoffeln, Alfaalfa, Baumwolle, Gewürze, Beerenobst.

Bevorzugt sind aus der Familie der Blattwespen (Tenthredinidae), Hoplocampa spp., Cephalcia spp., Nematus spp., Caliroa spp., Macrophyra spp. in Kuluturen wie Kernobst, Steinobst, Beerenfrüchte, Forst.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit dem Wirkstoff erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injezieren und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wird (Genetic Modified Organisms) und deren Teile behandelt. Der Begriff "Teile" bzw. "Teile von Pflanzen" oder "Pflanzenteile" wird oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Der Wirkstoff der Formel (I) kann in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen des Wirkstoffs mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Als Streckmittel eignen sich z.B. Wasser, polare und unpolare organische chemische Flüssigkeiten z.B. aus den Klassen der aromatischen und nichtaromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 % und daneben bevorzugt Streckmittel und/oder oberflächenaktive Mittel.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

### Anwendungsbeispiele

### Weichwanzen (Miridae)

Ganz besonders bevorzugt ist die Bekämpfung folgender Arten aus der Familie der Weichwanzen (Miridae):
Lygus lineolaris, Lygus spinolai in Möhren, Knollen-, Wurzel- und Stängelgemüse wie z.B. Spargel, Fruchtgemüse wie z.B. Paprika, Tomaten, Gurken; Kartoffeln, Baumwolle, Kohlgemüse, Kernobst, Beerenfrüchte wie z.B. Erdbeeren; Soja, Tee.
Plesiocoris rugicollis in Kernobst

### Beispiel 1A

Ca. 4 m² große Parzellen mit Teepflanzen der Sorte "Yabukita" werden in 3 Replikationen gegen Lygus spinolai behandelt. Dabei wird der Wirkstoff Beispiel (1-4) (150 OD) in der angegebenen Aufwandmenge gegen den kommerziellen Standard Imidacloprid (10 WP) in der angegebenen Aufwandmenge geprüft. Die Applikation erfolgt mit einer motorgetriebenen Rückenspritze. Dabei wird mit einer Wasseraufwandmenge von 10 000 l/ha behandelt.

Die Auswertung erfolgt 15 und 29 Tage nach der Behandlung, indem man die Abtötung der Nymphen an den Trieben bonitiert.

| Wirkstoff | Aufwandmenge (%) a.i. | Wirkung (% Abbott) | |
|---|---|---|---|
| | | 15 d | 29 d |
| Imidacloprid | 0.005 | 35.7 | 48.1 |
| Beispiel (I-4) | 0.01 | 92.9 | 100 |

### Beispiel 1 B

Ca. 14 Jahre alte Apfelbäume der Sorte "Holsteiner Cox" werden in 3 Replikationen gegen die Nordische Apfelwanze (Plesiocoris rugicollis) behandelt. Dabei wird der Wirkstoff Beispiel (1-4) (150 OD) in der angegebenen Aufwandmenge gegen den kommerziellen Standard Deltamethrin flüssig (EC 025) in den angegebenen Aufwandmengen geprüft. Die Applikation erfolgt mit einem Rückenspritzgerät. Dabei wird mit einer Wasseraufwandmenge von 500 l/ha/m Kronenhöhe behandelt.

Die Auswertung erfolgt 37 Tage nach der Behandlung, indem man die Abtötung der Larven an den Zweigen nach der Abbott-Methode bonitiert.

| Wirkstoff | Aufwandmenge (g) a.i./ha/m Kronenhöhe | Wirkung (%) Abbott 37 d |
|---|---|---|
| Deltamethrin | 3,75 | 78 |
| Beispiel (I-4) | 30 | 96 |

### Thripse (Thripidae)

Weiterhin ganz besonders bevorzugt ist die Bekämpfung folgender Arten aus der Familie der Thripse (Thripidae) in folgenden Kulturen:

| | |
|---|---|
| Frankliniella occidentalis Frankliniella schultzei Frankliniella fusca | in Gemüse wie z.B. Paprika, Tomaten, Gurken, Kohl z.B. Broccoli, Bohnen, Salat, Auberginen, Zucchini, Kürbisse, in Beerenfrüchten, z.B. Erdbeeren, in Melonen z.B. Wassermelonen, Netzmelonen, Cantaloup-Melonen, in Zierpflanzen wie Rosen, Hibiskus, Chrysanthemen sowie in Kartoffeln und in tropischen Kulturen wie z.B. Papayas, Avocado, Baumwolle, Tabak, Coniferen |
| Thrips palmi Thrips tabaci Thrips hawaiiensis | in Baumwolle, in Gemüse wie z.B. Paprika, Tomaten, Gurken, Bohnen, Kürbisgewächse, Auberginen, Zucchini, Kohl, Lauch, Zwiebeln, in Beerenfrüchten, in Melonen z.B. Wassermelonen, Netzmelonen, Cantaloup-Melonen, in Zierpflanzen wie z.B. Rosen, Hibiskus, in tropischen Kulturen wie z.B. Papayas, Ananas, Bananen, Kartoffeln, Wein, Baumwolle, Reis, Nüsse |
| Heliothrips haemorrhoidalis | in Gemüse wie z.B. Tomaten, Paprika, Bohnen, Gurken, Kürbisse, Auberginen, in Melonen sowie in Zierpflanzen wie z.B. Rosen, Hibiskus, Azaleen, tropische Kulturen wie Guaven, Zitrus wie z.B. Zitronen, Orangen, Wein, Nüsse wie z.B. Macademia-Nüsse |
| Hercinothrips femoralis Hercinothrips bicinctus Hercinothrips phaseoli | in tropischen Kulturen wie z.B. Bananen, Zierpflanzen, Gemüse wie z.B. Bohnen |
| Caliothrips phaseoli | in Gemüse, wie z.B. Bohnen, Zucchini, in tropischen Früchten wie z.B. Avocados |
| Baliothrips biformis | in Reis |
| Anaphothrips obscurus | in Mais, Kohlgemüse wie z.B. Weißkohl, Getreide wie z.B. Weizen |
| Scirthothrips aurantii Scirthothrips dorsalis Scirthothrips citri | in Zitrus wie z.B. Orangen, Zitronen, Grapefruits, Mandarinen, Zierpflanzen, Gemüse wie z.B. Gurken, Tomaten, Bohnen, Auberginen, Kürbisse; Melonen wie Wassermelonen, Cantaloup-Melonen, Gewürze wie Chilli; Tee |

### Beispiel 2

10 m² große Parzellen mit Gemüsepaprika der Sorte "Zingaro" werden in drei Replikationen gegen Frankliniella occidentalis behandelt. Die Applikation erfolgt mit einer pressluftbetriebenen Rückenspritze. Dabei werden die Wirkstoffe Beispiel (1-9) (240 SC) und Beispiel (1-4) (240 SC) in einer Tankmischung mit 0,1 % a.i. Rapsölmethylester (500 EW) und der kommerzielle Standard Acrinathrin (075 EW) in den angegebenen Aufwandmengen ausgebracht. Es erfolgen zwei Anwendungen im Abstand von 24 Tagen mit einer Wasseraufwandmenge von 1000 l/ha.

Die Auswertung erfolgt 17 und 21 Tage nach der 1. Behandlung und 4 Tage nach der 2. Behandlung, indem man die Abtötung der Tiere (Nymphen) an den Blüten bonitiert.

| Wirkstoff | Aufwandmenge g a.i./ha | Wirkung (% Abbott) | | |
|---|---|---|---|---|
| | | 17 d (1) | 21 d (1) | 4 d (2) |
| Acrinathrin | 60 | 98 | 91 | 87 |
| Beispiel (I-9) | 54 | 86 | 84 | 63 |
| Beispiel (I-4) | 60 | 71 | 85 | 80 |

### Beispiel 3

Ca. 22 m² große Parzellen mit Zucchini der Sorte "Italiana negra" werden in drei Replikationen gegen Caliothrips phaseoli behandelt. Die Applikation erfolgt mit einer motorbetriebenen Rückenspritze. Dabei wird der Wirkstoff Beispiel (1-4) (240 SC) in einer Tankmischung mit 0,1 % a.i. Rapsölmethylester (500 EW) und der kommerzielle Standard Endosulfan (350 EC) in den angegebenen Aufwandmengen geprüft. Die Wasseraufwandmenge beträgt ca. 510 l/ha.

Die Auswertung erfolgt 8 Tage nach der Behandlung, indem man die Abtötung der Tiere (Nymphen) an 5 Blättern bonitierte.

| Wirkstoff | Aufwandmenge g a.i./ha | Wirkung (% Abbott) |
|---|---|---|
| | | 8 d |
| Endosulfan | 525 | 67.0 |
| Beispiel (1-4) | 72 | 71.3 |

### Beispiel 4

10 m² große Parzellen mit Auberginen der Sorte "Dumaguete Long Purple" werden in drei Replikationen gegen Thrips palmi behandelt. Die Applikation erfolgt mit einem pressluftbetriebenen Rückengerät. Dabei wird der Wirkstoff Beispiel (1-4) (240 SC) in einer Tankmischung mit 0,2 % a.i. Rapsölmethylester (240 SC) und der kommerzielle Standard Imidacloprid (100 SL) in den angegebenen Aufwandmengen geprüft. Die Wasseraufwandmenge beträgt 400 l/ha. Es erfolgen drei Applikationen im Abstand von 8 bzw. 7 Tagen.

Die Auswertung erfolgt jeweils 4 Tage nach der 2. Behandlung und 7, 14 und 21 Tage nach der 3. Behandlung, indem man die Abtötung der Nymphen an den Blättern bonitierte.

| Wirkstoff | Aufwandmenge % a.i. | | Wirkung (% Abbott) | | |
|---|---|---|---|---|---|
| | | 4 d | 7 d | 14 d | 21 d |
| | | nach 2. Beh. | nach 3. Beh. | nach 3. Beh. | nach 3. Beh. |
| Imidacloprid | 0.01 | 82.9. | 75.0 | 62.1 | 53.1 |
| Beispiel (I-4) | 0.0096 | 82.9 | 75.0 | 82.8 | 90.6 |

### Beispiel 5

6 m² große Parzellen mit Auberginen der Sorte "Soraya" werden in drei Replikationen gegen Frankliniella occidentalis behandelt. Die Applikation erfolgt mit einer motorbetriebenen Rückenspritze. Dabei wurden die Wirkstoffe Beispiel (1-4) (240 SC) und Beispiel (1-9) (240 SC) in einer Tankmischung mit 0,1 % a.i. Rapsölmethylester (500 EW) und der kommerzielle Standard Spinosad (480 SC) in den angegebenen Aufwandmengen geprüft. Die Wasseraufwandmenge beträgt 1500 l/ha.

Die Auswertung erfolgt 25, 32 und 39 Tage nach der Behandlung, indem man die Abtötung der gemischten Population an den Blättern bonitierte.

| Wirkstoff | Aufwandmenge % a.i. | Wirkung (% Abbott) | | |
|---|---|---|---|---|
| | | 25 d | 32 d | 39 d |
| Spinosad | 0.012 | 94.7 | 89.3 | 95.3 |
| Beispiel (I-9) | 0.0054 | 71.1 | 62.1 | 92.5 |
| Beispiel (I-4) | 0.012 | 92.1 | 88.3 | 89.7 |

### Beispiel 6

15 m² große Parzellen mit Zwiebeln werden in zwei Replikationen gegen Thrips tabaci behandelt. Die Applikation erfolgt mit einer pressluftbetriebenen Rückenspritze. Dabei werden die Wirkstoffe Beispiel (1-4) in einer Tankmischung mit 0,2 % a.i. Rapsölmethylester (500 EW) und der kommerzielle Standard Dimethoat (380 EC) in der angegebenen Aufwandmenge in einer Tankmischung mit 0,9 % a.i. E-Actipron (900 EC) geprüft. Die Wasseraufwandmenge beträgt 300 l/ha.

Die Auswertung erfolgt 43 und 62 Tage nach der Behandlung, indem man die Abtötung der Population an den Blättern bonitiert.

| Wirkstoff | Aufwandmenge g a.i./ha | Wirkung (% Abbott) | |
|---|---|---|---|
| | | 43 d | 62 d |
| Dimethoat | 380 | 64.5 | 74.8 |
| Beispiel (I-4) | 96 | 83.0 | 84.5 |

### Beispiel 7

Ca. 16,5 m² große Parzellen mit Auberginen werden in drei Replikationen gegen Thrips palmi behandelt. Dabei wird der Wirkstoff Beispiel (1-4) und der kommerzielle Standard Imidacloprid (100 SL) mit einer pressluftbetriebenen Rückenspritze in den angegebenen Aufwandmengen appliziert. Die Wasseraufwandmenge beträgt 750 l/ha. Der Spritzbrühe wird im Falle von Beispiel (1-4) 0,2 % a.i. Rapsölmethylester (500 EW) hinzugefügt. Es erfolgen drei Anwendungen im Abstand von 7 und 14 Tagen.

Die Bestimmung der Abtötung in Prozent wird an je 20 Blättern vorgenommen. 7 , 13 und 21 Tage nach der zweiten Anwendung erhält man folgende Ergebnisse:

| Wirkstoff | Aufwandmenge | Wirkung (% Abbott) | | |
|---|---|---|---|---|
| | a.i. in % | 7 d | 13 d | 21 d |
| Imidacloprid | 0.0151 | 72 | 68 | 24 |
| Beispiel (I-4) | 0.0096 | 84 | 88 | 78 |

### Beispiel 8

Ca. 14 m² große Parzellen mit Baumwolle werden in vier Replikationen gegen die Frankliniella sp. behandelt. Dabei wird der Wirkstoff Beispiel (1-4) (240 SC) und der kommerzielle Standard Acephate (90 SP) mit einem Aufsattelgerät in den angegebenen Aufwandmengen appliziert. Die Wasseraufwandmenge beträgt 360 l/ha. Der Spritzbrühe mit Beispiel (1-4) wird 0,1 % a.i. Rapsölmethylester (500 EW) hinzugefügt.

Die Bestimmung der Wirkung wird anhand der Saugschäden an den Blättern in einer Skala von 1 bis 6 vorgenommen. Dabei bedeutet 1 keine Schädigung und 6 totale Schädigung. Nach 8 und 14 Tagen beobachtet man folgende Blattschädigungen:

| Wirkstoff | Aufwandmenge g a.i./ha | Blattschaden (%) | |
|---|---|---|---|
| | | 8 d | 14d |
| Beispiel (I-4) | 60 | 2.0 | 1.6 |
| Acephate | 1120 | 2.0 | 1.9 |

### Beispiel 9

Ca. 10 m² große Parzellen mit Gurken werden in 3 Replikationen gegen Thrips palmi behandelt. Die Applikation erfolgt mit einer luftdruckgetriebenen Rückenspritze. Dabei wird der Wirkstoff Beispiel (1-4) 240 SC), in einer Tankmischung mit 0,2 % a.i. Rapsölmethylester (500 EW) und der kommerzielle Standard Imidacloprid (100 SL) in den angegebenen Aufwandmengen ausgebracht. Die Anwendung erfolgt mit einer Wasseraufwandmenge von 750 l/ha. Es erfolgen zwei Anwendungen im Abstand von 8 d.

Die Auswertung erfolgt 3, 8, 11 und 15 Tage nach der 1. Behandlung, indem man die Abtötung der Tiere (Nymphen) an den Blättern bonitiert.

| Wirkstoff | Aufwandmenge g a.i./ha | Wirkung (% Abbott) | | | |
|---|---|---|---|---|---|
| | | 3 d | 8 d | 11 d | 15 d |
| Imidacloprid | 100 | 85.3 | 85.5 | 91.7 | 77.1 |
| Beispiel (I-4) | 72 | 64.5 | 91.0 | 80.4 | 70.1 |

### Beispiel 10

Ca. 5 m² Parzellen mit ca. 18 Jahre alten Teepflanzen der Sorte "Yabukita" werden in 3 Replikationen gegen Scirtothrips dorsalis behandelt. Dabei wird der Wirkstoff Beispiel (1-4) (100 OD) gegen die kommerziellen Standards Ethiprole (SC10 flowable) und Imidacloprid (50 WG) in den angegebenen Aufwandmengen geprüft. Die Applikation erfolgt mit einem luftdruckbetriebenen Spritzgerät. Die Wasseraufwandmenge beträgt 4500 l/ha. Die Auswertung erfolgt 7 Tage nach der Behandlung, indem man die Abtötung der Nymphen an den Pflanzen bonitiert.

| Wirkstoff | Aufwandmenge (%) a.i. | Wirkung (% Abbott) |
|---|---|---|
| | | 7 d |
| Ethiprole | 0.005 | 100 |
| Beispiel (I-4) | 0.01 | 100 |
| Imidacloprid | 0.005 | 44.4 |

### Beispiel 11

Ca. 26 m² große Parzellen mit Buschbohnen werden 16 Tage nach dem Auflaufen in vier Replikationen gegen Thrips tabaci behandelt. Die Applikation erfolgt mit einer pressluftbetriebenen Rückenspritze. Dabei werden die Wirkstoffe Beispiel (1-2) (240 SC) (1-4) (240 SC) und Beispiel (1-9) (240 SC) in einer Tankmischung mit 0.1 % a.i. Rapsölmethylester (500 EW) gegen den kommerziellen Standard Profenofos (720 EC) in den angegebenen Aufwandmengen geprüft. Die Wasseraufwandmenge beträgt 1000 l/ha. Es erfolgen zwei Anwendungen im Abstand von 10 Tagen.

Die Auswertung erfolgt 5 und 11 Tage nach der ersten Behandlung, indem man die Abtötung der Nymphen auf den Blättern bonitiert.

| Wirkstoff | Aufwandmenge (g) a.i./ha | Wirkung (% Abbott) | |
|---|---|---|---|
| | | 5d | 11d |
| Profenofos | 1300 | 80 | 75 |
| Beispiel (I-9) | 54 | 67 | 95 |
| Beispiel (I-2) | 54 | 33 | 90 |
| Beispiel (I-4) | 60 | 60 | 90 |

### Zwergzikaden (Cicadellidae)

Weiterhin ganz besonders bevorzugt ist die Bekämpfung folgender Arten aus der Familie der Zwergzikaden (Cicadellidae) in folgenden Kulturen:

| | |
|---|---|
| Empoasca devastans Empoasca fabae Empoasca flavescens Empoasca kraemeri Empoasca onukui Empoasca biguttula Empoasca vitis | in Gemüse wie Paprika, Tomaten, Gurken, Kohl z.B. Broccoli, Bohnen, Salat, Auberginen, Zucchini, Kürbisse, Sellerie, Erbsen, in Beerenfrüchten, in Melonen z.B. Wassermelonen, Netzmelonen, Cantaloup-Melonen, in Zierpflanzen wie Rosen, Hibiskus, in Zitrus wie Orangen, Mandarinen, Grapefruits sowie in Kartoffeln und in tropischen Kulturen wie z.B. Papayas, Bananen, Baumwolle, Tee, Wein, Nüsse wie z.B. Erdnüsse, Pecannüsse, |
| | |
| Idioscopus clypealis Idioscopus niveosparsus Idioscopus nitidulus | in Gemüse wie Paprika, Tomaten, Gurken, Bohnen, Kürbisgewächse, Auberginen, Zucchini, Kohl, in Beerenfrüchten, in Melonen z.B. Wassermelonen, Netzmelonen, Cantaloup-Melonen, in Zierpflanzen, in tropischen Kulturen wie z.B.Mangos, Bananen |
| | |
| Oncometopia fascialis Oncometopia nigricans | in Melonen sowie in Zierpflanzen wie z.B. Rosen, Hibiskus, Zitrus wie z.B. Orangen, Nüsse wie Pistazien |
| | |
| Erythroneura apicalis Erythroneura eburnea Erythroneura elegantulus Erythroneura variabilis | in Wein |
| | |
| Homalodisca cougulata | in Zitrus wie Orangen, Mandarinen, Zitronen, Grapefruits, Limetten, Kumquats, Wein |
| | |
| Circulifer tenellus | in Gemüse wie z.B. Kürbisse |
| | |
| Dalbus maidis | in Gemüse z.B. Buschbohnen |

### Beispiel 12

10 m² Parzellen mit Baumwolle werden in drei Replikationen gegen Empoasca biguttula behandelt. Die Applikation erfolgt mit einer pressluftbetriebenen Rückenspritze. Dabei wird der Wirkstoff Beispiel (1-4) (240 SC) in einer Tankmischung mit 0,2 % a.i. Rapsölmethylester (500 EW) gegen die kommerziellen Standards Imidacloprid (SL 100) und Buprofezin (WP50) in den angegebenen Aufwandmengen geprüft. Es erfolgen zwei Anwendungen im Abstand von 7 Tagen. Die Wasseraufwandmenge beträgt 750 l/ha.

Die Auswertung erfolgt 3, 7, 14 und 21 Tage nach der zweiten Behandlung durch Zählen der lebenden Tiere. Anschließend wird der Wirkungsgrad in Prozent nach Henderson und Tilton berechnet.

| Wirkstoff | Aufwandmenge (g) a.i./ha | Wirkung (% H + T) | | | |
|---|---|---|---|---|---|
| | | 3 d | 7 d | 14 d | 21 d |
| Imidacloprid | 30 | 97.3 | 99.6 | 95.6 | 72.5 |
| Beispiel (I-4) | 24 | 92.1 | 92.9 | 84.4 | 72.6 |
| Buprofezin | 50 | 96.5 | 94.7 | 90.1 | 67.1 |

### Beispiel 13

Ca. 10 m² große Parzellen mit Buschbohnen der Sorte "Carioquinha" werden in drei Replikationen gegen Dalbulus maidis behandelt. Die Applikation erfolgt mit einer pressluftbetriebenen Rückenspritze. Dabei werden die Wirkstoffe Beispiel (1-4) (240 SC) und Beispiel (1-9) (240 SC) in einer Tankmischung mit 0,1 % a.i. Rapsölmethylester (500 EW) und der kommerzielle Standard Imidacloprid (200 SL) in den angegebenen Aufwandmengen ausgebracht. Es erfolgen zwei Anwendungen im Abstand von 7 Tagen mit einer Wasseraufwandmenge von 300 l/ha.

Die Auswertung erfolgt 7 und 11 Tage nach der zweiten Behandlung, indem man die Abtötung der Tiere (Nymphen) an den Blättern bonitiert.

| Wirkstoff | Aufwandmenge (g) a.i./ha | Wirkung (% Abbott) | |
|---|---|---|---|
| | | 7 d | 11 d |
| Imidacloprid | 96 | 82 | 74 |
| Beispiel (I-4) | 96 | 73 | 69 |
| Beispiel (I-3) | 96 | 78 | 75 |

### Beispiel 14

Ein ca. 14 Jahre alter Mangobaum wird in drei Replikationen gegen Idioscopus clypealis behandelt. Die Applikation erfolgt mit einer Hochdruckspritze. Dabei wird der Wirkstoff Beispiel (1-4) (240 SC) in einer Tankmischung mit 0,2 % a.i. Rapsölmethylester (500 EW) und die kommerziellen Standards Imidacloprid (100 SL) und Pymetrozine (WP 25) in den angegebenen Aufwandmengen geprüft. Die Spritzbrühenmenge beträgt 10 1/Baum. Es werden fünf Behandlungen im Abstand 7, 14, 21 und 28 Tagen durchgeführt.

Die Auswertung erfolgt jeweils 7 d nach der 3. bis 5. Behandlung, indem man die Abtötung der Nymphen auf den Fruchtständen bonitiert.

| Wirkstoff | Aufwandmenge (%) | Wirkung (% Abbott) | | |
|---|---|---|---|---|
| | | 7 d nach | 7 d nach | 7 d nach |
| | | 3. Behandlung | 4. Behandlung | 5. Behandlung |
| Imidacloprid | 0.00025 | 69.1 | 82.2 | 86.4 |
| Beispiel (I-4) | 0.0016 | 54.7 | 98.1 | 99.4 |
| Pymetrozine | 0.002 | 70.9 | 98.6 | 94.8 |

### Beispiel 15

Ca. 4 m² Parzellen mit Teepflanzen der Sorte "Yabukita" werden in drei Replikationen gegen Empoasca onukui behandelt. Die Applikation erfolgt mit einer pressluftbetriebenen Rückenspritze. Dabei wird der Wirkstoff Beispiel (1-4) (150 OD) gegen den kommerziellen Standard Admire (10 WP) in den angegebenen Mengen geprüft. Die Wasseraufwandmenge beträgt 10 000 l/ha.

Die Auswertung erfolgt 15 und 29 Tage nach der Behandlung, indem man die Abtötung der Larven in Prozent auf den Trieben bonitiert.

| Wirkstoff | Aufwandmenge (%) a.i. | Wirkung (% Abbott) | |
|---|---|---|---|
| | | 15 d | 29 d |
| Admire | 0.005 | 89.2 | 91.8 |
| Beispiel (I-4) | 0.01 | 73 | 78.8 |

### Beispiel 16

10 m² Parzellen mit Auberginen werden in drei Replikationen gegen Empoasca biguttula behandelt. Die Applikation erfolgt mit einer pressluftbetriebenen Rückenspritze. Dabei wird der Wirkstoff Beispiel (1-4) (150 OD) gegen die kommerziellen Standards Imidacloprid (SL 100) und Profenofos (500 EC) in den angegebenen Aufwandmengen geprüft. Es erfolgen zwei Anwendungen im Abstand von 7 Tagen. Die Wasseraufwandmenge beträgt 750 l/ha.

Die Auswertung erfolgt 2, 6 und 13 Tage nach der ersten Behandlung, indem man die Abtötung der Tiere (Nymphen) an den Pflanzen boniert.

| Wirkstoff | Aufwandmenge (g) a.i./ha | Wirkung (% Abott) | | |
|---|---|---|---|---|
| | | 2 d | 6 d | 13 d |
| Imidacloprid | 30 | 38.1 | 71.6 | 58.7 |
| Beispiel (I-4) | 50 | 52.4 | 56.0 | 66.7 |
| Profenofos | 500 | 41.3 | 65.1 | 53.8 |

### Minierfliegen (Agromyzidae)

Weiterhin ganz besonders bevorzugt ist die Bekämpfung folgender Arten aus der Familie der Minierfliegen (Agromyzidae) in folgenden Kulturen:

| | |
|---|---|
| Liriomyza brassicae Liriomyza bryoniae Liriomyza cepae Liriomyza chilensis Liriomyza hunidobrensis Liriomyza sativae Liriomyza trifolie Liriomyza quadrata | in Gemüse wie Paprika, Tomaten, Gurken, Kohl, Bohnen, Salat, Auberginen, Zucchini, Kürbisse, in Melonen z.B. Wassermelonen, Netzmelonen, Cantaloup-Melonen, in Zierpflanzen wie Rosen, Hibiskus, sowie in Kartoffeln, Rüben, |
| | |
| Pegomya hyoscyami | in Rüben, in Gemüse und Getreide, z.B. Weizen |
| Pegomya spinaciae | |

### Beispiel 17

Ca. 25 m² große Parzellen mit Winterweizen der Sorte "Capfern" werden in vier Replikationen gegen Pegomya spp. behandelt. Die Applikation erfolgt mit einer pressluftgetriebenen Rückenspritze. Dabei wird der Wirkstoff Beispiel (1-4) (240 SC) in einer Tankmischung mit 0,2 % a.i. Rapsölmethylester (500 EW) und der kommerzielle Standard Thiacloprid (240 OD) in den angegebenen Aufwandmengen geprüft. Es erfolgen zwei Anwendungen im Abstand von 7 Tagen. Die Wasseraufwandmenge beträgt 350 l/ha.

Die Auswertung erfolgt 3 Tage nach der letzten Behandlung, indem man die Abtötung der Larven an den Pflanzen bonitiert.

| Wirkstoff | Aufwandmenge g a.i./ha | Wirkung (% Abbott) |
|---|---|---|
| | | 10 d |
| Thiacloprid | 72 | 100 |
| Beispiel (I-4) | 96 | 100 |

### Beispiel 18

Ca. 10 m² große Parzellen mit Bohnen der Sorte "Lago Azul" werden in drei Replikationen gegen Liriomyza sp. behandelt. Dabei wird der Wirkstoff Beispiel (1-4) (150 OD) und die kommerziellen Standards Cyromazine (WP 75) und Abamectin (EC 018) mit einer gasdruckbetriebenen Rückenspritze in den angegebenen Aufwandmengen appliziert. Die Wasseraufwandmenge beträgt 400 bzw. 500 l/ha.. Es erfolgen drei Anwendungen im Abstand von jeweils 7 Tagen.

Die Bestimmung der Abtötung in Prozent wird an je 10 Blättern vorgenommen. 2, 7, 12, 18, 20 und 25 Tage nach der ersten Anwendung erhält man folgende Ergebnisse:

| Wirkstoff | Aufwandmenge (g) a.i./ha | Wirkung (% Abbott) | | | | | |
|---|---|---|---|---|---|---|---|
| | | 2 d | 7 d | 12 d | 18 d | 20 d | 25 d |
| Cyromazine | 130 | 44 | 61 | 42 | 54 | 32 | 0 |
| Beispiel (I-4) | 100 | 40 | 69 | 30 | 43 | 57 | 46 |
| Abamectin | 14.4 | 36 | 80 | 52 | 70 | 43 | 60 |

### Gallmücken (Cecidomyiidae)

Außerdem ganz besonders bevorzugt ist die Bekämpfung folgender Arten aus der Familie der Gallmücken (Cecidomyiidae):
Dasineura brassicae, Dasineura mali, Dasineura piri in Möhren, Knollen-, Wurzel- und Stängelgemüse wie z.B. Spargel, Fruchtgemüse wie z.B. Paprika, Tomaten, Gurken; Kartoffeln, Baumwolle, Kohlgemüse, Kernobst, Gewürze.

Prodiplosis vaccinii, Prodiplosis longifila, Thecodiplosis brachyntera, Thecodiplosis japonensis, Sitodiplosis mosellana, Haplodiplosis equestris in Gemüse wie z. B. Fruchtgemüse (Tomaten, Paprika), Citrus (z. B. Limonen, Orangen, Grapefruits, Clementinen), getreide (z.B. Weizen, Gerste), Koniferen und Forst.

Contarinia lycopersici, Contarinia maculipennis, Contarinia humuli, Contarinia johnsoni, Contarinia nasturti, Contarinia okadai, Contarinia tritici, Contarinia pisi, Contarinia sorghicola, Contarinia medicaginis, Contarinia mali in Gemüse wie z. B. Kohlgemüse, Fruchtgemüse; Getreide wie z. B. Weizen, Sorghum; Kernobst; Hopfen.

### Beispiel 19 a)

Ca. 16 Jahre alte Apfelbäume der Sorte "Elan" werden in 3 Replikationen gegen Dasineura mali behandelt. Dabei wird der Wirkstoff Beispiel (1-4) (100 OD) in der angegebenen Aufwandmenge gegen den kommerziellen Standard Pirimicarb (50 WG) in der angegebenen Aufwandmenge geprüft. Die Applikation erfolgt mit einem Zerstäuber. Dabei wird mit einer Wasseraufwandmenge von 1000 l/ha/m Kronenhöhe behandelt.

Die Auswertung erfolgt 59 Tage nach der Behandlung, indem man die Abtötung der Larven auf Basis der vorhandenen Adulten an den Trieben nach der Abbott-Methode bonitiert.

| Wirkstoff | Aufwandmenge (g) | Wirkung (%) Abbott |
|---|---|---|
| | a.i./ha/m Kronenhöhe | |
| | | 59 d |
| Pirimicarb | 125 | 0 |
| Beispiel (I-4) | 72 | 95.1 |

### Beispiel 19 b)

Ausgewachsene Birnenbäume mit ca. 3,5m Kronenhöhe der Sorte "Conference" werden in 4 Replikationen gegen Dasineura pyri behandelt. Dabei wird der Wirkstoff Beispiel (1-4) als (150 OD) und als (240 SC) mit 0,1% a.i. Rapsölmehtylester (Mero 733 1R) in einer Tankmischung in der angegebenen Aufwandmenge gegen den kommerziellen Standard Endosulfan (350 EC) in der angegebenen Aufwandmenge geprüft. Die Applikation erfolgt mit einem Zerstäuber. Dabei wird mit einer Wasseraufwandmenge von 1000 l/ha/m Kronenhöhe behandelt. Es erfolgen zwei Anwendungen im Abstand von 7 Tagen.

Die Auswertung erfolgt 9 Tage nach der 2. Behandlung, indem man die Abtötung der Larven in den gerollten Blättern nach der Abbott-Methode bonitiert.

| Wirkstoff | Aufwandmenge | Wirkung (% Abbott) |
|---|---|---|
| | (g) a.i./ha/m Kronenhöhe | |
| | | 9d |
| Endosulfan | 472.5 | 71.6 |
| Beispiel (I-4) | 120 | 94.6 |
| 240 SC + Mero | | |
| Beispiel (I-4) | 150 | 100 |
| 150 OD | | |

### Fruchtfliegen (Tephritidae)

Weiterhin ganz besonders bevorzugt ist die Bekämpfung folgender Arten aus der Familie der Fruchtfliegen (Tephritidae) in folgenden Kulturen:

| | |
|---|---|
| Anastrepha fraterculus | in Gemüse wie z.B. Paprika, Tomaten, Gurken, Bohnen, Auberginen, Zucchini, Kürbisse, in Beerenfrüchten, z.B. Erdbeeren, in Melonen z.B. Wassermelonen, Netzmelonen, Cantaloup-Melonen, in Kernobst, Steinobst, in Zierpflanzen wie Rosen, Hibiskus, Chrysanthemen sowie in Kartoffeln, Wein und in tropischen Kulturen wie z.B. Papayas, Avocado, Guave, Mangos, in Citrus wie z. B. Orangen, Klementinen, Grapefruits |
| Anastrepha ludens | |
| Anastrepha striata | |
| Anastrepha oligua | |
| Anastrepha distineta | |
| Ceratitis capitata | in Baumwolle, in Gemüse wie z.B. Paprika, Tomaten, Gurken, Bohnen, Kürbisgewächse, Auberginen, Zucchini, Kohl, Lauch, Zwiebeln, in Beerenfrüchten, in Melonen z.B. Wassermelonen, Netzmelonen, in Kern- und Steinobst, in Zierpflanzen wie z.B. Rosen, Hibiskus, in tropischen Kulturen wie z.B. Papayas, Kakis Ananas, Bananen, Kartoffeln, Wein, in Citrus wie z. B. Orangen, Klementinen, Grapefruits |
| Ceratitis cosyra | |
| Ceratitis rosa | |
| Dacus oleae | in Gemüse wie z.B. Tomaten, Paprika, Bohnen, Gurken, Kürbisse, Auberginen, in Melonen sowie in Zierpflanzen wie z.B. Rosen, Hibiskus, Azaleen; tropische Kulturen wie Kakis, Guaven, Zitrus wie z.B. Zitronen, Orangen; Wein, Oliven, Beerenfrüchte wie z. B. Erdbeeren |
| Dacus ciliatus | |
| Dacus dorsalis | |
| Dacus cucurbitae | |
| Dacus tyroni | |
| Dacus tsuseonis | |
| Rhagoletis cerasi | in Zitrus wie z.B. Orangen, Zitronen, Grapefruits, Mandarinen, Zierpflanzen, Gemüse wie z.B. Gurken, Tomaten, Bohnen, Auberginen, Kürbisse; Melonen wie Wassermelonen, Cantaloup-Melonen; Kern- und Steinobst; Beerenfrüchte wie z. B. Erdbeeren |
| Rhagoletis completa | |
| Rhagoletis pomonella | |

### Beispiel 20

Ca. 10 Jahre alte Pfirsichbäume der Sorte "Oom Sarel" werden in drei Replikationen gegen Ceratitis capitata behandelt. Die Applikation erfolgt mit einer Hochdruckspritze bzw. einem pressluftbetriebenen Rückengerät. Dabei wird der Wirkstoff Beispiel (1-4) (150 OD) und der kommerzielle Standard Fenthion (500 EC) in den angegebenen Aufwandmengen geprüft. Die Wasseraufwandmenge beträgt 2500 l/ha. Es erfolgen drei Applikationen im Abstand von 7 bzw. 19 Tagen.

Die Auswertung erfolgt 9 und 16 Tage nach der 3. Behandlung, indem man die Abtötung der Tiere an den Früchten mit Hilfe der Abbott-Formel bonitierte.

| Wirkstoff | Aufwandmenge | Wirkung (% Abbott) | |
|---|---|---|---|
| | g a.i./ha | 9 d | 16 d |
| | | nach 3. Beh. | nach 3. Beh. |
| Fenthion | 1700 | 86.7 | 88.9 |
| Beispiel (I-4) | 100 | 86.7 | 100 |

### Beispiel 21

Ca. 26 Jahre alte Süßkirschbäume der Sorte "Van" werden in drei Replikationen gegen Rhagoletis cerasi behandelt. Die Applikation erfolgt mit einem Vernebelungsgerät (Atomizer). Dabei wird der Wirkstoff Beispiel (1-4) (150 OD) und der kommerzielle Standard Dimethoate (400 EC) in den angegebenen Aufwandmengen ausgebracht. Es erfolgen zwei Anwendungen im Abstand von 6 Tagen mit einer Wasseraufwandmenge von 500 l/ha/m Kronenhöhe.

Die Auswertung erfolgt 23 Tage nach der 2. Behandlung, indem man die Abtötung der Tiere (Larven) an den Früchten mit Hilfe der Abbott-Formel bonitiert.

| Wirkstoff | Aufwandmenge | Wirkung (% Abbott) |
|---|---|---|
| | g a.i./ha/m Kronenhöhe | 23 d |
| Dimethoate | 200 | 100 |
| Beispiel (I-4) | 75 | 100 |

### Beispiel 22 A

Ca. 10 m² große Parzellen mit Flaschenkürbissen der Sorte "Waltham" werden in drei Replikationen gegen Dacus ciliatus behandelt. Die Applikation erfolgt mit einer motorbetriebenen Rückenspritze. Dabei wird der Wirkstoff Beispiel (1-4) (150 OD) und der kommerzielle Standard Fenthion (500 EC) in den angegebenen Aufwandmengen geprüft. Es erfolgen drei Anwendungen jeweils im Abstand von 7 Tagen. Die Wasseraufwandmenge beträgt ca. 500 l/ha.

Die Auswertung erfolgt 8, 14 und 21 Tage nach der 1. Behandlung, indem man den Fruchtbefall bonitierte.

| Wirkstoff | Aufwandmenge g a.i./ha | Wirkung (% Abbott) | | |
|---|---|---|---|---|
| | | 8 d | 14 d | 21 d |
| Fenthion | 300 | 59.6 | 48.9 | 60.3 |
| Beispiel (I-4) | 200 | 59.5 | 48.9 | 44.5 |

### Beispiel 22 B

In einem Laborversuch werden 40 Oliven in vier Replikationen gegen die Olivenfruchtfliege (Dacus oleae) drei Tage nach der Eiablage behandelt. Dabei wird der Wirkstoff (1-4) (100 OD) und die kommerziellen Standards Fenthion (500 EC) und Imidacloprid (200 SL) in den angegebenen Aufwandmengen geprüft.

Die Auswertung erfolgt 14 Tage nach der Eiablage, indem man die Anzahl der verlassenen Fraßgänge zählt (Entwicklung der Larven ist abgeschlossen), während das Fehlen derartiger Fraßgänge die Wirksamkeit gegen die Larven indiziert.

| Wirkstoff | Aufwandmenge % | Anzahl der Fraßgänge (%) |
|---|---|---|
| | | 14 d nach der Eiablage |
| Imidacloprid | 0.01 | 11.9 |
| Beispiel (I-4) | 0.02 | 3.1 |
| Fenthion | 0.05 | 1.9 |
| unbehandelt | - | 84.4 |

### Blattkäfer (Chrysomelidae)

Weiterhin ganz besonders bevorzugt ist die Bekämpfung folgender Arten aus der Familie der Blattkäfer (Chrysomelidae) in folgenden Kulturen:

| | |
|---|---|
| Aulacophora femoralis | in Gemüse wie Paprika, Tomaten, Gurken, Bohnen, Salat, Auberginen, Zucchini, Kürbisse, in Beerenfrüchten, in Melonen z.B. Wassermelonen, Netzmelonen, Cantaloup-Melonen, |
| Aulacophora similis | |
| | |
| Lema lichenis | in Getreide, Reis |
| Lema melanopa | |
| Lema oryzae | |
| Lema bilineata | |
| | |
| Leptinotarsa decemlineata | in Tomaten, Kartoffeln |
| | |
| Phyllotreta undulata | in Gemüse wie Kohlgemüse, Fruchtgemüse, in Raps |
| Haltica lythri | in Wein |

### Beispiel 23

Ca. 10 m² große Parzellen mit Kartoffeln der Sorte "Quarta" werden in drei Replikationen gegen Leptinotarsa decemlineata behandelt. Die Applikation erfolgt mit einer pressluftgetriebenen Rückenspritze. Dabei wird der Wirkstoff Beispiel (1-4) (240 SC) in einer Tankmischung mit 0,2 % a.i. Rapsölmethylester (500 EW) und der kommerzielle Standard Deltamethrin (100 EC) in den angegebenen Aufwandmengen geprüft. Die Wasseraufwandmenge beträgt 300 l/ha.

Die Auswertung erfolgt 3, 8 und 20 Tage nach der Behandlung, indem man die Abtötung der Tiere (Larven) an den Pflanzen bonitiert.

| Wirkstoff | Aufwandmenge g a.i./ha | Wirkung (% Abbott) | | |
|---|---|---|---|---|
| | | 3 d | 8 d | 20 d |
| Deltamethrin | 75 | 100 | 100 | 100 |
| Beispiel (I-4) | 72 | 53.3 | 72.7 | 84.4 |

### Beispiel 24

Ca. 12 m² große Parzellen mit Auberginen der Sorte "DLP" werden in drei Replikationen gegen Erdflöhe (Phyllotreta sp.) behandelt. Die Applikation erfolgt mit einem pressluftgetriebenen Rückenspritzgerät. Dabei wird der Wirkstoff Beispiel (1-4) (100 OD) und die kommerziellen Standards Imidacloprid (100 SL) und Profenofos (500 EC) in den angegebenen Aufwandmengen ausgebracht. Es erfolgen vier Anwendungen im Abstand von 7, 8 und 10 Tagen mit einer Wasseraufwandmenge von 750 l/ha.

Die Auswertung erfolgt 7 Tage nach der letzten Behandlung, indem man die Abtötung der Larven auf den Pflanzen bonitiert.

| Wirkstoff | Aufwandmenge g a.i./ha | Wirkung (% Abbott) |
|---|---|---|
| | | 7 d |
| Imidacloprid | 100 | 98 |
| Beispiel (I-4) | 70 | 89 |
| Profenofos | 500 | 84 |

### Beispiel 25

Ca. 25 m² große Parzellen mit Winterweizen der Sorte "Capfern" werden in vier Replikationen gegen Lema melanopa behandelt. Die Applikation erfolgt mit einem pressluftgetriebenen Rückenspritzgerät. Dabei wird der Wirkstoff Beispiel (1-4) (240 SC) in einer Tankmischung mit 0,2 % a.i. Rapsölmethylester (500 EW) und der kommerzielle Standard Calypso (240 OD) in den angegebenen Aufwandmengen ausgebracht. Es erfolgen zwei Anwendungen im Abstand von 7 Tagen mit einer Wasseraufwandmenge von 350 l/ha.

Die Auswertung erfolgt 3 Tage nach der letzten Behandlung, indem man die Abtötung der Larven auf den Pflanzen bonitiert.

| Wirkstoff | Aufwandmenge g a.i./ha | Wirkung (% Abbott) |
|---|---|---|
| | | 10 d |
| Calypso | 72 | 96.4 |
| Beispiel (I-4) | 96 | 82.1 |

### Rüsselkäfer (Curculionidae)

Weiterhin ganz besonders bevorzugt ist die Bekämpfung folgender Arten aus der Familie der Rüsselkäfer (Curculionidae) in folgenden Kulturen:

| | |
|---|---|
| Anthonomus grandis | in Baumwolle, in Kernobst wie Äpfel, Beerenobst wie Erdbeeren, |
| Anthonomus pomorum | |
| Anthonomus signatus | |
| | |
| Lissorhoptus oryzae | in Reis |
| | |
| Ceutorhynchus brassicae | in Raps |
| Ceutorhynchus napi | |
| Ceutorhynchus assimilis | |
| Ceutorhynchus picitarsis | |
| Ceutorhynchus quadridens | |
| | |
| Premnotrypes vorax | in Kartoffeln |

### Beispiel 26-A

Ca. 25 m² große Parzellen mit Raps der Sorte "Artus" werden in vier Replikationen gegen Ceutorhynchus napi behandelt. Die Applikation erfolgt mit einer motorbetriebenen Rückenspritze. Dabei wird der Wirkstoff Beispiel (1-4) in einer Tankmischung mit 0,2 % a.i. Rapsölmethylester (500 EW) und die kommerziellen Standards Deltamethrin (25 EC), Lambda-Cyhalothrin (S100) und Thiacloprid (OD 240) in den angegebenen Aufwandmengen geprüft. Die Wasseraufwandmenge beträgt 250 l/ha.

Die Auswertung erfolgt 55 Tage nach der Behandlung, indem man die Abtötung der Larven auf den Pflanzen bonitiert.

| Wirkstoff | Aufwandmenge g a.i./ha | Wirkung (% Abbott) |
|---|---|---|
| | | 55 d |
| Deltamethrin | 5 | 77.1 |
| Beispiel (I-4) | 72 | 74.3 |
| Thiacloprid | 72 | 52.4 |
| Lambda-Cyhalothrin | 5 | 89.5 |

### Beispiel 26 B

Apfelbäume der Sorte "Holsteiner Cox" werden in ca. 20 m² großen Parzellen in 4 Replikationen gegen Anthonomus pomorum, dem Apfelblütenstecher behandelt. Dabei wird der Wirkstoff Beispiel (1-4) (150 OD) in der angegebenen Aufwandmenge gegen eine Tankmischung der kommerziellen Standards Thiacloprid (SC 480) und Deltamethrin flüssig in den angegebenen Aufwandmengen geprüft. Die Applikation erfolgt mit einem Rückenspritzgerät. Dabei wird mit einer Wasseraufwandmenge von 500 l/ha/m Kronenhöhe behandelt.

Die Auswertung erfolgt 22 Tage nach der Behandlung, indem man die Abtötung der Larven an den Blütenständen nach der Abbott-Methode bonitiert.

| Wirkstoff | Aufwandmenge (g) | Wirkung (%) Abbott |
|---|---|---|
| | a.i./ha/m Kronenhöhe | 22 d |
| Thiacloprid | 48 | |
| + | + | |
| Deltamethrin | 3,75 | 88 |
| Beispiel (I-4) | 48 | 88 |

### Miniermotten (Gracillaridae)

Außerdem ganz besonders bevorzugt ist die Bekämpfung folgender Arten aus der Unterfamilie der Miniermotten (Phyllocnistinae) in folgenden Kulturen:

| | |
|---|---|
| Phyllocnistis citrella | in Zitrus wie Orangen, Klementinen, Grapefruits, Zitronen. |
| | |
| Lithocolletis ringoniella | in Kern- und Steinobst, Nüssen |
| Lithocolletis crataegella | |
| Lithocolletis coryfoliella | |
| | |
| Leucoptera coffeella | in Kaffee |

### Beispiel 27

Orangenbäumchen auf ca. 30 m² Parzellen werden in vier Replikationen gegen Phyllocnistis citrella behandelt. Die Applikation erfolgt mit einer motorbetriebenen Rückenspritze. Dabei wird der Wirkstoff Beispiel (1-4) (150 OD) gegen den kommerziellen Standard Imidacloprid (192 SC) in den angegebenen Mengen geprüft. Die Wasseraufwandmenge beträgt 935 l/ha.

Die Auswertung erfolgt 7 und 14 Tage nach der Behandlung, indem man die Abtötung der Larven in Prozent auf den Trieben bonitiert.

| Wirkstoff | Aufwandmenge (g) a.i./ha | Wirkung (% Abbott) | |
|---|---|---|---|
| | | 7 d | 14 d |
| Imidacloprid | 140 | 91.7 | 52.3 |
| Beispiel (I-4) | 132 | 97.9 | 68.2 |

### Wickler (Tortricidiae)

Ganz besonders bevorzugt ist auch die Bekämpfung folgender Arten aus der Familie der Wickler (Tortricidae) in folgenden Kulturen: Laspeyresia molesta in Kern- und Steinobst wie beispielsweise Pfirsiche, Nektarinen, Aprikosen; Carpocapsa pomonella in Kernobst; Clysia ambiguella in Wein; Lobesia botrana in Wein.

### Beispiel 28

Ca. 10 Jahre alte Pfirsichbäume werden in vier Replikationen gegen den Pfirsichwickler (Laspeyresia molesta) behandelt. Die Applikation erfolgt mit einer pressluftbetriebenen Rückenspritze. Dabei wird der Wirkstoff (1-4) (150 OD) gegen die kommerziellen Standards Pyriproxyfen (35 WP) und Acetamiprid (30 SG) in den angegebenen Aufwandmengen geprüft. Die Wasseraufwandmenge beträgt 935 l/ha.

Die Auswertung erfolgt 41 Tage nach der Behandlung, indem man die Abtötung der Tiere auf den Bäumen bonitiert.

| Wirkstoff | Aufwandmenge (g) a.i./ha | Wirkung (% Abbott) |
|---|---|---|
| | | 41d |
| Pyrifroxyfen | 123 | 39.0 |
| Acetamiprid | 168 | 35.8 |
| Beispiel (I-4) | 153 | 48.1 |

### Beispiel 29

Ca. 15 Jahre alte Apfelbäume der Sorte "Golden Delicious" werden in vier Replikationen gegen Carpocapsa pomonella behandelt. Die Applikation erfolgt mit einem Vernebelungsgerät (Atomizer). Dabei wird der Wirkstoff Beispiel (1-4) (240 SC) in einer Tankmischung mit 0.1 % a.i. des Adjuvants Steffes Mero (Rapsölmethylester) (733 1R) und der kommerzielle Standard Chlorpyrifos-methyl (25 WP) in den angegebenen Aufwandmengen geprüft. Die Wasseraufwandmenge beträgt 1052 l/ha. Es erfolgen zwei Applikationen im Abstand von 13 Tagen.

Die Auswertung erfolgt 32 Tage nach der 2. Behandlung, indem man die Fruchtschäden mit Hilfe der Abbott-Formel bonitierte.

| Wirkstoff | Aufwandmenge | Wirkung (% Abbott) |
|---|---|---|
| | g a.i./ha | 32 d |
| | | nach 2. Beh. |
| Chlorpyrifos-methyl | 0.1 | 66.7 |
| Beispiel (I-4) | 0.012 | 73.7 |

### Beispiel 30

Ca. 16 Jahre alte Apfelbäume der Sorte "Golden Delicious" werden in vier Replikationen gegen Carpocapsa pomonella behandelt. Die Applikation erfolgt mit einem Zerstäubergerät. Dabei wird der Wirkstoff Beispiel (1-4) (150 OD) im Vergleich zu Imidacloprid (200 SC) in den angegebenen Aufwandmengen ausgebracht. Es erfolgen zwei Anwendungen im Abstand von 16 Tagen mit einer Wasseraufwandmenge von 1000 l/ha.

Die Auswertung erfolgt 14 Tage nach der 2. Behandlung, indem man die Fruchtschäden mit Hilfe der Abbott-Formel bonitiert.

| Wirkstoff | Aufwandmenge (%) | Wirkung (% Abbott) |
|---|---|---|
| | | |
| Imidacloprid | 0.015 | 26.3 |
| Beispiel (I-4) | 0.015 | 73.7 |

### Blattwespen (Tenthredinidae)

Auch ganz besonders bevorzugt ist die Bekämpfung folgender Arten aus der Familie der Blattwespen (Tenthrenidae):

| | |
|---|---|
| Hoplocampa brevis, | in Kernobst und Steinobst |
| Hoplocampa testudinea, | |
| Hoplocampa flava, | |
| Hoplocampa minuta | |
| | |
| Nematus ribesii | in Beerenobst, z.B. Stachelbeeren |
| | |
| Caliroa cerasi | in Steinobst, z.B. Kirschen |

### Beispiel 31

Apfelbäume der Sorte "Holsteiner Cox" werden in ca. 20 m² großen Parzellen in 4 Replikationen gegen Sägewespen Hoplocampa sp. behandelt. Dabei wird der Wirkstoff Beispiel (1-4) (150 OD) in der angegebenen Aufwandmenge gegen eine Tankmischung der kommerziellen Standards Thiacloprid (SC 480) und Deltamethrin flüssig in den angegebenen Aufwandmengen geprüft. Die Applikation erfolgt mit einem Rückenspritzgerät. Dabei wird mit einer Wasseraufwandmenge von 500 l/ha/m Kronenhöhe behandelt.

Die Auswertung erfolgt 57 Tage nach der Behandlung, indem man die Abtötung der Larven an den Früchten nach der Abbott-Methode bonitiert.

| Wirkstoff | Aufwandmenge (g) | Wirkung (%) Abbott |
|---|---|---|
| | a.i./ha/m Kronenhöhe | 57 d |
| Thiacloprid | 48 | |
| + | + | |
| Deltamethrin | 3,75 | 94 |
| Beispiel (I-4) | 48 | 98 |

## Patentansprüche

1. Verwendung von Verbindungen der Formel (I) 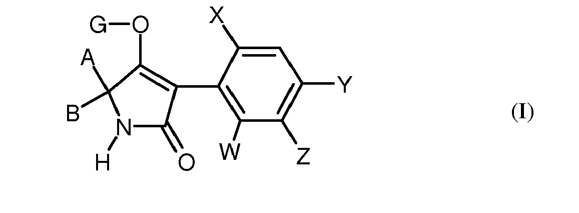 in welcher
X für Halogen, Alkyl, Alkoxy, Halogenalkyl, Halogenalkoxy oder Cyano steht,
W, Y und Z unabhängig voneinander für Wasserstoff, Halogen, Alkyl, Alkoxy, Halogenalkyl, Halogenalkoxy oder Cyano stehen,
A für Wasserstoff, jeweils gegebenenfalls durch Halogen substituiertes Alkyl, Alkoxyalkyl, gesättigtes, gegebenenfalls substituiertes Cycloalkyl steht, in welchem gegebenenfalls mindestens ein Ringatom durch ein Heteroatom ersetzt ist,
B für Wasserstoff oder Alkyl steht, oder
A und B gemeinsam mit dem Kohlenstoffatom an das sie gebunden sind, für einen ge- sättigten oder ungesättigten, gegebenenfalls mindestens ein Heteroatom ent- haltenden unsubstituierten oder substituierten Cyclus stehen,
G für Wasserstoff (a) oder für eine der Gruppen 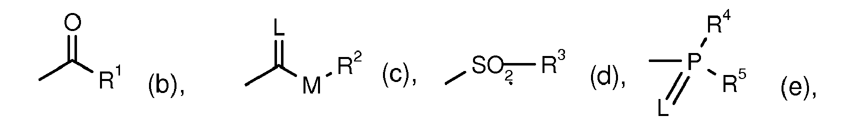 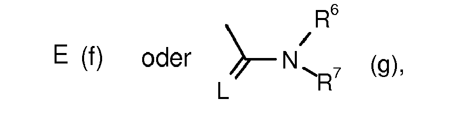
steht,
worin
E für ein Metallion oder ein Ammoniumion steht,
L für Sauerstoff oder Schwefel steht,
M für Sauerstoff oder Schwefel steht,
R¹ für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxy- alkyl steht,
R² für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
R³ für gegebenenfalls durch Halogen substituiertes Alkyl oder gegebenenfalls substituiertes Phenyl steht,
R⁴ und R⁵ unabhängig voneinander für jeweils gegebenenfalls durch Halogen substituiertes Alkyl, Alkoxy, Alkylamino, Dialkylamino, Alkylthio, Alke- nylthio, Cycloalkylthio oder für jeweils gegebenenfalls substituiertes Phe- nyl, Benzyl, Phenoxy oder Phenylthio stehen und
R⁶ und R⁷ unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl oder gemeinsam mit dem N-Atom, an das sie gebunden sind, für einen gegebenenfalls durch Sauerstoff oder Schwefel unterbrochenen gegebenenfalls substituierten Ring stehen
in Form ihrer Isomerengemische oder reinen Isomeren, zur Bekämpfung von Insekten aus der Familie der Blattkäfer (Chyrsomelidae).

2. Verwendung gemäß Anspruch 1, wobei die Verbindungen der Formel (I) folgende Definitionen haben:
W steht für Wasserstoff, C₁-C₄-Alkyl, C₁-C₄-Alkoxy, Chlor, Brom oder Fluor,
X steht für C₁-C₄-Alkyl, C₁-C₄-Alkoxy, C₁-C₄-Halogenalkyl, Fluor, Chlor oder Brom,
Y und Z stehen unabhängig voneinander für Wasserstoff, C₁-C₄-Alkyl, Halogen, C₁-C₄- Alkoxy oder C₁-C₄-Halogenalkyl,
A steht für Wasserstoff oder jeweils gegebenenfalls durch Halogen substituiertes C₁- C₆-Alkyl oder C₃-C₈-Cycloalkyl,
B steht für Wasserstoff, Methyl oder Ethyl,
A, B und das Kohlenstoffatom an das sie gebunden sind, stehen für gesättigtes C₃-C₆- Cycloalkyl, worin gegebenenfalls ein Ringglied durch Sauerstoff oder Schwefel ersetzt ist und welches gegebenenfalls einfach oder zweifach durch C₁-C₄-Alkyl, Trifluormethyl oder C₁-C₄-Alkoxy substituiert ist,
G steht für Wasserstoff (a) oder für eine der Gruppen 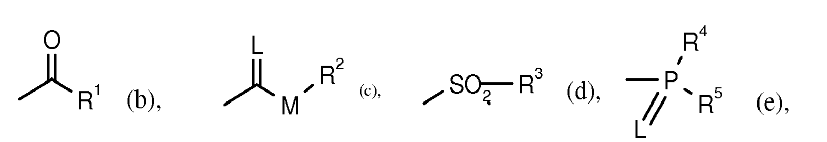 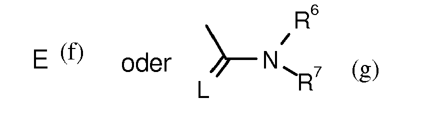 in welchen
E für ein Metallion oder ein Ammoniumion steht,
L für Sauerstoff oder Schwefel steht und
M für Sauerstoff oder Schwefel steht,
R¹ steht für jeweils gegebenenfalls durch Halogen substituiertes C₁-C₁₀-Alkyl, C₂-C₁₀- Alkenyl, C₁-C₄-Alkoxy-C₁-C₄-alkyl, C₁-C₄-Alkylthio-C₁-C₄-alkyl oder gegebenenfalls durch Fluor, Chlor, C₁-C₄-Alkyl oder C₁-C₂-Alkoxy substituiertes C₃-C₆-Cycloalkyl,
für gegebenenfalls durch Fluor, Chlor, Brom, Cyano, Nitro, C₁-C₄-Alkyl, C₁-C₄- Alkoxy, Trifluormethyl oder Trifluormethoxy substituiertes Phenyl,
für jeweils gegebenenfalls durch Chlor oder Methyl substituiertes Pyridyl oder Thienyl,
R² steht für jeweils gegebenenfalls durch Fluor oder Chlor substituiertes C₁-C₁₀- Alkyl, C₂-C₁₀-Alkenyl, C₁-C₄-Alkoxy-C₂-C₄-alkyl,
für gegebenenfalls durch Methyl oder Methoxy substituiertes C₅-C₆-Cycloalkyl oder
für jeweils gegebenenfalls durch Fluor, Chlor, Brom, Cyano, Nitro, C₁-C₄-Alkyl, C₁-C₄-Alkoxy, Trifluormethyl oder Trifluormethoxy substituiertes Phenyl oder Benzyl,
R³ steht für gegebenenfalls durch Fluor substituiertes C₁-C₄-Alkyl oder für ge- gebenenfalls durch Fluor, Chlor, Brom, C₁-C₄-Alkyl, C₁-C₄-Alkoxy, Trifluormethyl, Trifluormethoxy, Cyano oder Nitro substituiertes Phenyl,
R⁴ steht für jeweils gegebenenfalls durch Fluor oder Chlor substituiertes C₁-C₄-Alkyl, C₁-C₄-Alkoxy, C₁-C₄-Alkylamino, C₁-C₄-Alkylthio oder für jeweils gegebenenfalls durch Fluor, Chlor, Brom, Nitro, Cyano, C₁-C₄-Alkoxy, Trifluormethoxy, C₁-C₄- Alkylthio, C₁-C₄-Halogenalkylthio, C₁-C₄-Alkyl oder Trifluormethyl substituiertes Phenyl, Phenoxy oder Phenylthio,
R⁵ steht für C₁-C₄-Alkoxy oder C₁-C₄-Thioalkyl,
R⁶ steht für C₁-C₆-Alkyl, C₃-C₆-Cycloalkyl, C₁-C₆-Alkoxy, C₃-C₆-Alkenyl oder C₁-C₄- Alkoxy-C₁-C₄-alkyl,
R⁷ steht für C₁-C₆-Alkyl, C₃-C₆-Alkenyl oder C₁-C₄-Alkoxy-C₁-C₄-alkyl,
R⁶ und R⁷ stehen zusammen für einen gegebenenfalls durch Methyl oder Ethyl substi- tuierten C₃-C₆-Alkylenrest, in welchem gegebenenfalls ein Kohlenstoffatom durch Sauerstoff oder Schwefel ersetzt ist in Form ihrer Isomerengemische oder reinen Isomeren.

3. Verwendung gemäß Anspruch 1, wobei die Verbindungen der Formel (I) folgende Definitionen haben:
W steht für Wasserstoff, Methyl, Ethyl, Chlor, Brom oder Methoxy,
X steht für Chlor, Brom, Methyl, Ethyl, Propyl, i-Propyl, Methoxy, Ethoxy oder Trifluormethyl,
Y und Z stehen unabhängig voneinander für Wasserstoff, Fluor, Chlor, Brom, Methyl, Ethyl, Propyl, i-Propyl, Trifluormethyl oder Methoxy,
A steht für Methyl, Ethyl, Propyl, i-Propyl, Butyl, i-Butyl, sec.-Butyl, tert.-Butyl, Cyclopropyl, Cyclopentyl oder Cyclohexyl,
B steht für Wasserstoff, Methyl oder Ethyl, oder
A, B und das Kohlenstoffatom an das sie gebunden sind, stehen für gesättigtes C₆- Cycloalkyl, worin gegebenenfalls ein Ringglied durch Sauerstoff ersetzt ist und welches gegebenenfalls einfach durch Methyl, Ethyl, Trifluormethyl, Methoxy, Ethoxy, Propoxy oder Butoxy substituiert ist,
G steht für Wasserstoff (a) oder für eine der Gruppen 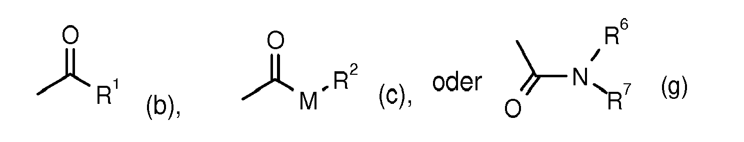 in welchen
M für Sauerstoff oder Schwefel steht,
R¹ steht für C₁-C₈-Alkyl, C₂-C₄-Alkenyl, Methoxymethyl, Ethoxymethyl, Ethylthiomethyl, Cyclopropyl, Cyclopentyl oder Cyclohexyl, für gegebenenfalls einfach bis zweifach durch Fluor, Chlor, Brom, Cyano, Nitro, Methyl, Ethyl, Methoxy, Trifluormethyl oder Trifluormethoxy substituiertes Phenyl, für jeweils gegebenenfalls durch Chlor oder Methyl substituiertes Pyridyl oder Thienyl,
R² steht für C₁-C₈-Alkyl, C₂-C₄-Alkenyl, Methoxyethyl, Ethoxyethyl oder für Phenyl oder Benzyl,
R⁶ und R⁷ stehen unabhängig voneinander für Methyl, Ethyl oder zusammen für einen C₅- Alkylenrest, in welchem die C₃-Methylengruppe durch Sauerstoff ersetzt ist in Form ihrer Isomerengemische oder reinen Isomeren.

4. Verwendung gemäß Anspruch 1, wobei die Verbindungen der Formel (I) folgende Definitionen haben:
W steht für Wasserstoff oder Methyl,
X steht für Chlor, Brom oder Methyl,
Y und Z stehen unabhängig voneinander für Wasserstoff, Chlor, Brom oder Methyl,
A, B und das Kohlenstoffatom an das sie gebunden sind, stehen für gesättigtes C₆- Cycloalkyl, in welchem gegebenenfalls ein Ringglied durch Sauerstoff ersetzt ist und welches gegebenenfalls einfach durch Methyl, Trifluormethyl, Methoxy, Ethoxy, Propoxy oder Butoxy substituiert ist,
G steht für Wasserstoff (a) oder für eine der Gruppen 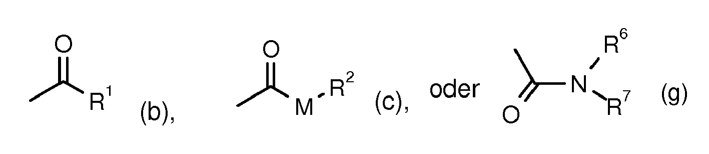 in welchen
M für Sauerstoff oder Schwefel steht,
R¹ steht für C₁-C₈-Alkyl, C₂-C₄-Alkenyl, Methoxymethyl, Ethoxymethyl, Ethylthiomethyl, Cyclopropyl, Cyclopentyl, Cyclohexyl oder für gegebenenfalls einfach durch Fluor, Chlor, Brom, Methyl, Methoxy, Trifluor- methyl, Trifluormethoxy, Cyano oder Nitro substituiertes Phenyl, für jeweils gegebenenfalls durch Chlor oder Methyl substituiertes Pyridyl oder Thienyl,
R² steht für C₁-C₈-Alkyl, C₂-C₄-Alkenyl, Methoxyethyl, Ethoxyethyl, Phenyl oder Benzyl,
R⁶ und R⁷ stehen unabhängig voneinander für Methyl, Ethyl oder zusammen für einen C₅- Alkylenrest, in welchem die C₃-Methylengruppe durch Sauerstoff ersetzt ist in Form ihrer Isomerengemische oder reinen Isomeren.

5. Verwendung gemäß Anspruche 1, wobei die Verbindung der Formel (I) ausgewählt ist aus folgenden Verbindungen: 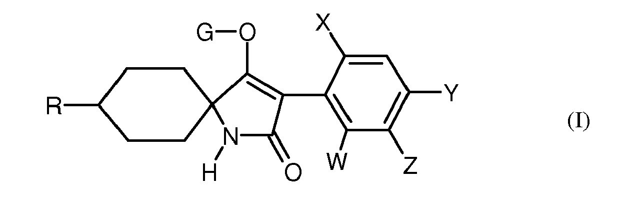
| **W** | **X** | **Y** | **Z** | **R** | **G** |
|---|---|---|---|---|---|
| H | Br | H | CH₃ | OCH₃ | CO-i-C₃H₇ |
| H | Br | H | CH₃ | OCH₃ | CO₂-C₂H₅ |
| H | CH₃ | H | CH₃ | OCH₃ | H |
| H | CH₃ | H | CH₃ | OCH₃ | CO₂-C₂H₅ |
| CH₃ | CH₃ | H | Br | OCH₃ | H |
| CH₃ | CH₃ | H | Cl | OCH₃ | H |
| H | Br | CH₃ | CH₃ | OCH₃ | CO-i-C₃H₇ |
| H | CH₃ | Cl | CH₃ | OCH₃ | CO₂C₂H₅ |
| CH₃ | CH₃ | CH₃ | CH₃ | OCH₃ | H |
| CH₃ | CH₃ | H | Br | OC₂H₅ | CO-i-C₃H₇ |
| H | CH₃ | CH₃ | CH₃ | OC₂H₅ | CO-n-C₃H₇ |
| H | CH₃ | CH₃ | CH₃ | OC₂H₅ | CO-i-C₃H₇ |
| H | CH₃ | CH₃ | CH₃ | OC₂H₅ | CO-c-C₃H₅ |

6. Verwendung gemäß Anspruch 1, wobei die Verbindung folgende Struktur hat:

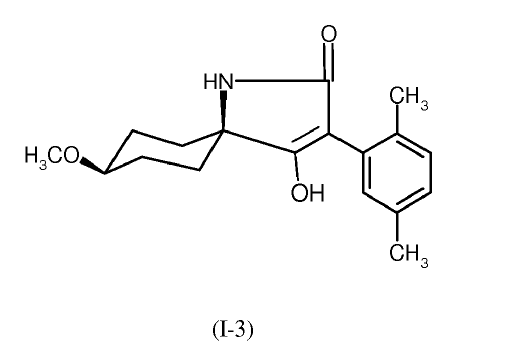

7. Verwendung gemäß Anspruch 1, wobei die Verbindung folgende Struktur hat:

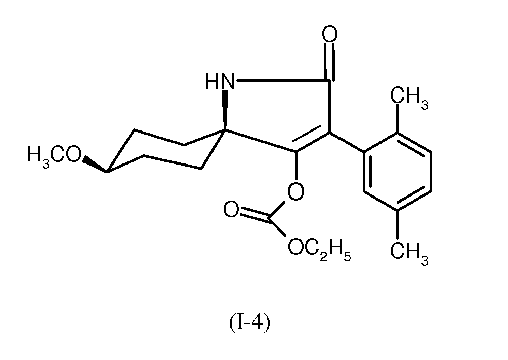

8. Verwendung gemäß Anspruch 1, wobei die Verbindung der Formel (I) folgende Struktur hat: 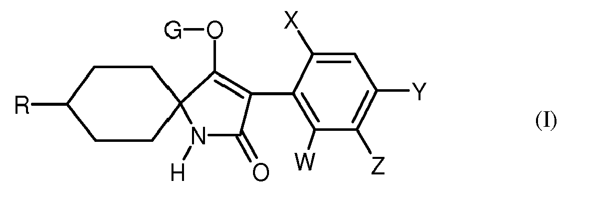
| **W** | **X** | **Y** | **Z** | **R** | **G** |
|---|---|---|---|---|---|
| H | CH₃ | H | CH₃ | OCH₃ | CO₂-C₂H₅ |
